# EUROPEAN PATENT SPECIFICATION

(11) **EP 0 381 767 B1**
(45) Date of publication and mention of the grant of the patent: **01.06.1994**
(21) Application number: 89908246.5
(22) Date of filing: 18.07.1989
(51) Int. Cl.: B60Q 1/54, B60Q 1/44

(54) **DISPLAY DEVICE FOR CAR**
ANZEIGEANORDNUNG FÜR FAHRZEUG
DISPOSITIF D'AFFICHAGE POUR VOITURES

(30) Priority: 18.07.1988 JP 178332/88; 11.08.1988 JP 200417/88; 11.08.1988 JP 200418/88; 21.10.1988 JP 265774/88; 28.10.1988 JP 140870/88 U; 19.01.1989 JP 110433/89; 02.03.1989 JP 123981/89 U; 06.03.1989 JP 153568/89; 18.04.1989 JP 198565/89
(43) Date of publication of application: 16.08.1990
(73) Proprietor: TAMAPACK CO,LTD., Tokyo 196 (JP)
(72) Inventor: ISHIKAWA, Masaaki, Akishima-shi Tokyo 196 (JP); YAMADA, Masao, Akishima-shi Tokyo 196 (JP)
(74) Representative: DIEHL GLAESER HILTL & PARTNER
(86) International application number: JP8900719
(87) International publication number: WO9000991

(56) References cited:
- EP-A- 0 019 502
- DE-A- 1 945 867
- FR-A- 1 477 800
- JP-A- 6 374 742
- JP-A-58 124 954
- JP-A-58 128 939
- JP-A-61 175 138
- US-A- 3 320 586
- US-A- 3 676 844
- US-A- 4 149 141

## Description

### Field of the Invention

This invention relates to a display device for providing people with information concerning traffic from displays corresponding to various traffic conditions, thus enhancing safety of vehicles in traffic, and a display body used therefor.

### Background of the Invention

This invention relates to a display device for a vehicle and particularly to a display device for preventing vehicle accidents as known e.g. from US-A-3 320 586.

A conventional display device provided at the rear an automobile or bike to prevent collisions, is a light which is activated upon braking or handling a brake lever. However, with this display devices if the distance between cars is not sufficient and braking is conducted suddenly, a collision may still occur. Further, if a driver maintain a distance for enough behind the car in front to prevent a collision he is frequently squeezed by the car behind, thus obliging him to shorten his following.

If a car approaches a sloped road from a flat road, or a gravel road from an asphalt road, it is often hard to maintain its speed even if the driver operates the accelerator.

In such a case, a driver changes gear to increase the rotations of the engine. Since an operaion of the accelerator doesn't necessarily increase speed, a display device which assesses a car's speed from changes of accelerator operation is not practical.

A following driver becomes aware of the turning direction of the car in front when it car turns, although he is previously informed by a winker. Further, a car body moves a little after the turning operation.

When a bus or a taxi is running on a mountain road with many curves or on a bumpy road, the driver worries about his driving, "How fast am I going?" or "What shall I do if the car in front brakes suddenly?"

The tale lamp notifies the following car of a braking operation and the winker tells the following car and the oncoming car of a driver's intention to change traffic lanes or to make right or left turn. These display devices show driving conditions or driver intentions to other cars. However, persons inside the car are unable to see the displays. Therefore, they must infer the conditions from the movement of the car.

### Disclosure of the Invention

This invention is designed to overcome the above defects. An object of the present invention is to provide an accelerator operation amount display device which shows the amount of accelerator operation to a following driver, who can thus select a safe following distance.

Another object of the present invention is to provide a display body whose display portion gradually expands in response to the accelerator operation amount.

Another object of the present invention is to provide a display body in which a plurality of divided display portions are made a cyclically and in sequence, so that the display portion appears to be rotating in accordance with the accelerator operation level.

Another object of the invention is to provide a display device which informs a following car of the speed of the car in front.

A further object of the present invention is to provide a vehicle body turning direction display device which enables a following car to see a handle operation of the car in front.

Another object of the present invention is to provide a condition display device for use in a vehicle which allows various displays to be observed by other drivers, such as reflecting the actual motion of a vehicle or showing a stoppedg condition of a vehicle, in accordance with the situation.

A still further object of the present invention is to provide an interior display device in a car, with which informs persons inside the car of the driving condition.

A still further object of the present invention is to provide an accelerator operation amount sensor for providing data to the accelerator operation amount display device for preventing decrease in magnetic flux interlinkage of coil caused by excess current to maintain good sensitivity.

The present invention is provided with a sensor for sensing the extent of accelerator operation and a luminous display placed so as to face outside the car. This display is designed to expand according to the extent of accelerator operation. It is also provided with means for sensing the rotations of the engine and the extent of accelerator operation. The rotations of the engine and the extent of brake pedal operation, together with said accelerator operation level, are luminously displayed inside and outside the car.

The present invention is also provided with a speed sensing means and an acceleration-deceleration sensing means. A plurality of significantly different character-strings is displayed outside the car in response to sensing results of the above sensing means.

The present invention is also provided with a sensing means for sensing the turning direction and turning angle, together with an appropriate display means.

### Brief Description of the Drawings

Figure 1 is a block diagram showing the structure of the accelerator operation amount display device,
Figure 2 is a circuit diagram of a sensor,
Figure 3 is a circuit diagram of a controller,
Figure 4 is a circuit diagram of a driver and the display,
Figure 5 is a drawing of a model designating an arrangement of a peripheral portion of the accelerator pedal when the accelerator operation degree display apparatus is formed by a sensor provided on the magnetic flux path,
Figure 6 shows a partially cut perspective view of a magnetic path,
Figures 7 to 20 are plan views of main part of the display body used for the accelerator operation degree display apparatus,
Figure 21 is a circuit diagram of a driver and display so that the display body is observed so that it is located,
Figure 22 to 25 show a plan view the main part of the display body for use in a driver and display shown in Figure 21,
Figure 26 is a schematic diagram of a model of a structure for detecting the degree of the operation of the accelerator pedal by using the ultrasonic sound wave,
Figure 27 shows a schematic drawing of a model of a structure for detecting the degree of the depression of the accelerator pedal by using a variable resistor,
Figure 28 shows a sectional view of a main part shown in Figure 27,
Figure 29 is a circuit diagram of a display for utilizing 12 element LED driver IC,
Figures 30(a), (b) and (c) are the drawings of the example of the display body for designating the number of the rotation of the engine, the display of the degree of depression of the accelerator pedal and the depression or non-depression of the brake pedal,
Figure 31 is a block diagram of an apparatus for displaying the number of the rotation of the engine by using a numerical data so that the numerical data can be observed externally,
Figure 32 is a drawing of a schematic structure designating one example of a sensor for detecting the number of rotation of the engine,
Figure 33 shows a drawing of the block diagram of a main part of the vehicle operation status display apparatus,
Figure 34 shows a flowchart of a control program relating to the vehicle operation status display appratus,
Figure 35 is a schematic perspective view of the rotation degree detecting means of the handle in the vehicle moving direcitons display apparatus,
Figure 36 is a real view of the handle on which the reflector body is provided in the vehicle moving direction display apparatus,
Figures 37(a), (b) and (c) are drawings for explaining the means for detecting degree of rotation in the vehicle moving direction display apparatus,
Figure 38 shows a circuit diagram for designating the display control circuit in the vehicle moving direction display apparatus,
Figure 39 shows a circuit diagram designating a concrete example of the comparator in the vehicle moving direction display apparatus,
Figures 40(a) and (b) are plan views for designating a modification of the reflector in the vehicle moving direction display apparatus,
Figure 41 is a plan view of a modification of the means for detecting the degree of the rotation of the handle in the vehicle moving direction display apparatus,
Figure 42 shows a block diagram for designating a modification of the display control circuit in the vehicle moving direction display apparatus, and
Figures 43 (a), (b) show the characteristics of the amplifier shown in Figure 42.

### The Best Mode for Practicing the Present Invention

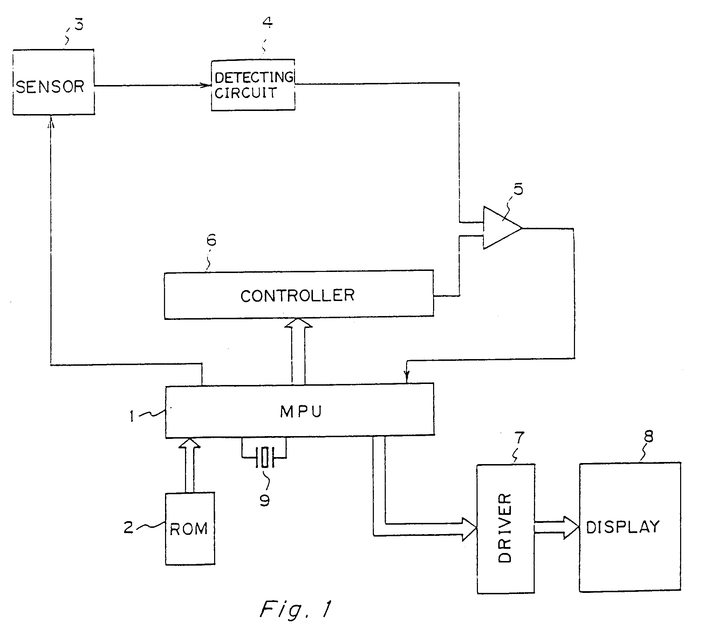

Figure 1 shows a block diagram of a display apparatus for displaying the amount of an accelerator operation according to the present invention. A micro-processor (called MPU hereinafter) 1 comprises a so-called one-chip micro-processor installed with a CPU, a RAM, a parallel input and output port, a timer, and a clock oscillator. The operation program of the MPU is written in ROM 2, which is connected to MPU 1 through the data bus for MPU 1.

A drive pulse is supplied to sensor 3 for detecting the amount of accelerator operation and the drive pulse is applied from the output port 1 bit of the MPU. The detection output of the sensor 3 is supplied to comparator 5 through a rectification or a current smoothing detecting circuit 4. The output of comparator 5 is added to a one-bit input of MPU 1.

On the other hand, the output port of MPU 1 (for example, 9 bits) is connected to controller 6 and the output of controller 6 is applied to comparator 5 as a reference voltage.

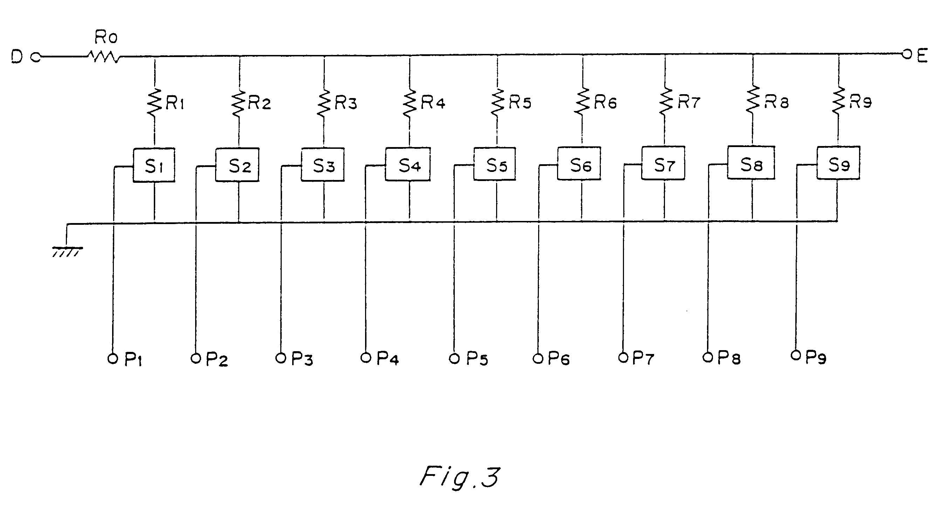

The controller 6 has a plurality of resistors and switching elements, as shown in Figure 3, and the switching element is selected by the MPU 1, thereby varying the reference voltage of the comparator 5.

The other output of MPU 1 is supplied to driver 7 and the output of driver 7 is applied to display 8. A clock oscillator is provided to crystal oscillator 9.

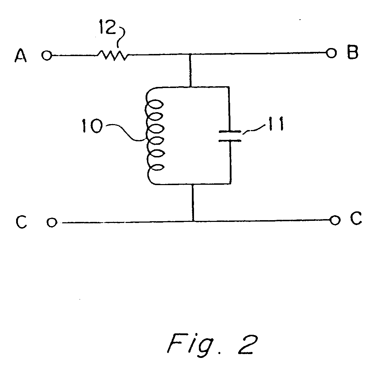

Figure 2 shows a circuit diagram of sensor 3. As shown, sensor 3 comprises a parallel oscillating circuit comprising coil 10 and condenser 11. Terminal B is connected to detection circuit 4 and the output of the output port of 1 bit of MPU 1 is supplied to the parallel oscillation circuit through resistor 12. Terminal C is maintained at ground potential.

Coil 9 is formed of that circle flat having a diameter of about 10 cm. A 0.6-mm-wire is turned 30 times and provided with a condenser 11 and a resistor 12. Coil 9, condenser 11 and resistor 12 are enclosed in a suitable protector and fixed to the floor and to the accelerator pedal. They are formed by using a lead line, as shown in Figure 1. A rectangular 5k Hz wave is formed by a program using MPU 1. This wave is applied to the parallel oscillator circuit from the output port of one bit of MPU 1.

Figure 3 shows a circuit diagram of the controller 6. Register R0 is grounded (connected to the minus terminal of the power source) through resistors R1 to R9, switching element S1 to S9 such as transistor, FET. Respective control terminals of the switching elements are connected to output ports P1 to P9 of the MPU 1. One of the resistors R1 to R9 is selected by making one of the output ports P1 to P9 at "H" level. The output voltage, which is divided between resistor R0 and one of resistors R1 to R9 is provided to terminal E. A stable voltage is supplied between terminal D and ground through a zener diode. The voltage produced at terminal E is supplied to comparator 5 in Figure 1 as the reference voltage.

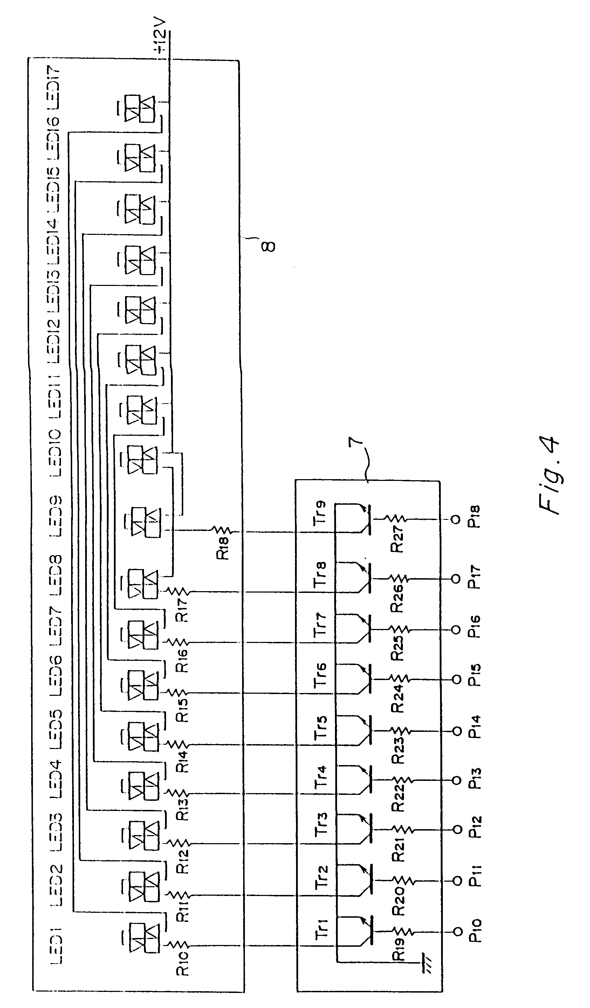

Figure 4 is an example of a circuit diagram of the driver 7 and the display 8. Driver 7 is formed of transistors Tr₁ to Tr₉. The bases of respective transistors are connected to the other output ports P₁₀ to P₁₉ of MPU 1 through corresponding registors R₁₉ to R₂₇. The emitters of respective transistors are commonly grounded. The connector is connected to the terminal of corresponding light emitting elements LED1 to LED8 through corresponding registors R₁₀ to R₁₈. The other terminal of these light emitting elements LED1 to LED8 are connected to the + terminal of the power source, not shown, through the corresponding light emitting elements LED 10 to LED 17. Operation of the display device for the amount of accelerator operation according to the present invention is explained hereinafter.

The driving signal is formed into a rectangular wave of about 5kHz by an execution of a timer interruption routine and applied to the parallel oscillation circuit. Therefore, the sensor 3 outputs a sine wave signal which becomes the maximum in an oscillation frequency due to a flywheel effect and the sine wave signal is subject to a rectification by a diode, not shown, of detecting circuit 4. The rectification output is smoothed by a filter, not shown, to provide almost direct current and is input to a comparator 5 as a signal to be compared.

MPU 1 operates controller 6 by executing other programs. By referring to Figure 3, the output port P1 selected from among output ports P1 to P9 is first converted from "L" level to "H" level. Then, switching element S1 become conductive and the terminal voltage of resistor R1 is supplied to comparator 5 as a reference voltage. The output of comparator 5 is supplied to an input port of MPU 1 and MPU1 examines whether or not the state of the input port is changed from "L" to "H" level. If it is not changed, the output port P1 is returned to the original "L" level and the output port P2 is changed from "L" level to "H" level. Thus, MPU 1 examines the state of the input port in the same manner as described above. If the state of the input port is not changed, the output port P2 is returned to "L" level and the output port P3 is changed from "L" level to "H" level, thereby detecting the state of the input port. Such operation is repeated until the outout port P9 is reached in turns hereinafter and about 500 msec passes before a cycle of the operation is completed. The operation is conducted so that the reference voltage of comparator 5 is stepped from a high voltage to a low voltage. When the state of the input port and output of comparator 5 are turned to "H" level, it is judged which of output ports P1 to P9 is turned to "H" level. Based on this judgement, it is determined which of the output ports P10 to P18 to be outputted to driver 7 is turned to "H" level, and thus the execution is conducted. The signal to be compared is input to comparator 5. When sensor 3 is fixed under the accelerator pedal, this signal is set to a maximum when the accelerator pedal is not delressed. This is realized by previously determining the frequency of the driving signal of the sensor and the oscillation frequency of the parallel oscillation circuit. The difference between the voltage of the signal to be compared and the maximum voltage is obtained when the accelerator pedal is fully depressed. The difference is divided into 9 steps in the embodiment and resistors R0 to R9 of controller 6 are determined so that 9 steps of different voltages are applied to the comparator as reference voltages. For example, the maximum voltage is 5V and the voltage of the signal to be compared when said accelerator pedal is fully stepped on is 0.6V, the difference between the maximum voltage and the voltage of the signal to be compared is 4.4V. Accordingly, voltages of 4.4V, 3.91V, 3.42V, 2.93V, 2.44V, 1.96V, 1.47V, 0.98V and 0.49V are sequentially supplied to comparator 5 as reference voltages and the operation of output ports P1 to P9. If the accelerator pedal is fully depressed 9 voltage of 0.6V is applied as the signal to be compared. In this case, where output port P9 is in "H" level, i.e., the reference voltage of comparator 5 is 0.49V, the output of comparator 5 becomes "H" level. Therefore, MPU 1 turns all the output ports P10 to P17 for outputting the signal to driver 7 to "H" level. Accordingly, when the accelerator pedal is fully depressed, all the green LEDs 1 to 17, except for LED9 are turned on. However, if the accelerator pedal is only slightly depressed a voltage of 4.2V is applied as the signal to be compared. In this case, where output port P2 is in "H" level, i.e., the reference voltage of comparator 5 is 3.91V, the output of comparator 5 becomes "H" level. Therefore, MPU 1 turns only the output port P17 for outputting the signal to driver 7 to "H" level. Accordingly, in this case, LED8 and LED10 in Figure 4 are turned on. When the accelerator pedal is not depressed, output port P18 is turned to "H" level, and, for example, yellow LED is turned on. Output port 18 is turned to "L" level so that LED 9 is turned off when the accelerator pedal is depressed upon lightening other LEDs. This embodiment is formed of an LED but may be formed using a white-heat electric valve as the light emitting element.

The coil 10 of sensor 3 is provided close to the floor of the automobile. As described above, the magnetic flux produced when the drive pulse is applied to the coil 10 is outputted from one terminal of coil 10. It then passes through the floor of the automobile and returns to the other end of the coil 10. The floor of the automobile is formed of an iron plate. Therefore, when the magnetic flux penetrates the iron plate, an AC current is produced. As a result, the magnetic flux around the coil 10 is decreased, thus lowering the sensitivity of the sensor.

The problem can be solved with the following structure.

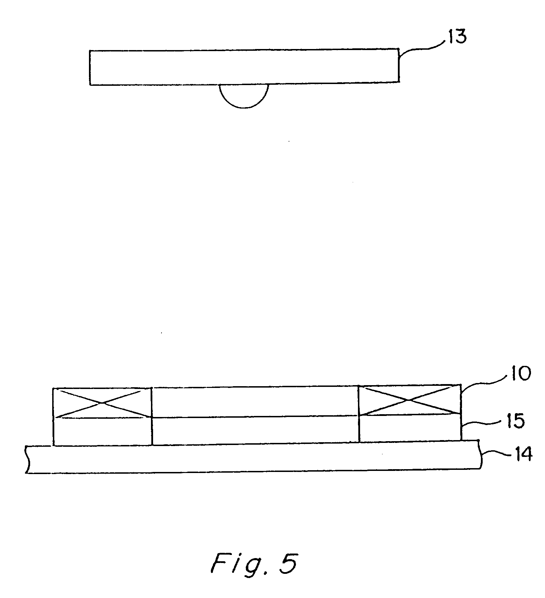

Figure 5 is a model diagram representing a positional arrangement of a circuit around the periphery of the accelerator pedal relating to the accelerator pedal operating amount displaying apparatus. In Figure 5, accelerator pedal 13 is positioned in the front part of the automobile and magnetic path 15 is formed by a silicon plate fixed on the floor 14 under accelerator pedal 13. Coil 10 forming the parallel oscillation circuit is fixed or mounted on the magnetic path.

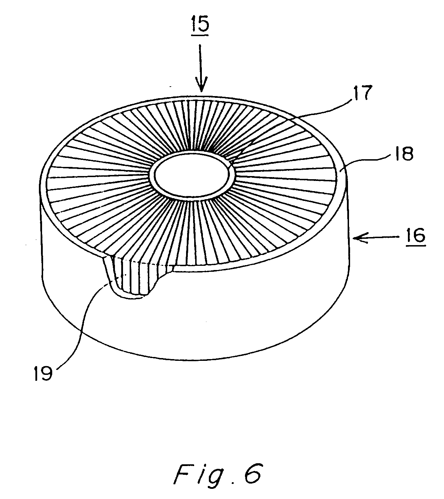

Figure 6 shows a partially cut perspective view representing the shape of magnetic path 15. Magnetic path 15 is formed of a material such as plastic, rubber or alminium and comprises an empty cylindrical casing 16. Casing 16 comprises an inner cylindrical portion 17 and an outer cylindrical portion 18. A plurality of sliced silicon iron plates 19 is provided in the annulus between the outer cylindrical portion 18 and inner cylindrical portion 17. These plates are perpendicular to the bottom wall of casing 16 and are arranged radially around the inner cylindrical portion 17 to outer cylindrical portion 18. The casing 16 is supported by a cap or may be fixed by an acryil bond without using the cap. (This is not shown in the drawing.) Further, the silicon iron plate 19 may be formed integrally with the casing 16 or with coil 10 without using casing 16, by means of an acryil bond, for example. The outer diameter of outer cylindrical portion 18 is almost equal to the outer diameter of coil 10 used for the ocsillating circuit. The sliced silicon iron plate 19 is arranged in casing 16 and the gap between it and outer cylindrical portion 18 may be filled by acryil bond or glass epoxy. In the embodiment, the silicon iron plate is used as a magnetic material for forming magnetic path 15. However, any kind of magnetic material with a high permeability, such as a parmaloy (trade name) ferrite thin plate may be used.

Magnetic path 15 may be baked on a disc ring-like plate formed of ferrite.

A magnetic flux is produced when the drive pulse voltage is applied to coil 10 and the accompanying current output from one terminal of the coil passes through the magnetic path 15 and then returns to the other terminal of coil 10. The magnetic resistance of magnetic path 15 is small compared with that of the floor 14 of the automobile, which is formed of iron plate. Thus, little of the magnetic flux output from one terminal of coil 10 passes through the floor 14, most of the magnetic flux passing through magnetic path 15 and returning to the other terminal of coil 10. Accordingly, the eddy current produced in magnetic path 15 is very small, so that the magnetic flux crossing the coil 10 is not significantly decreased. As a result, the sensitivity of the sensor is not significantly affected.

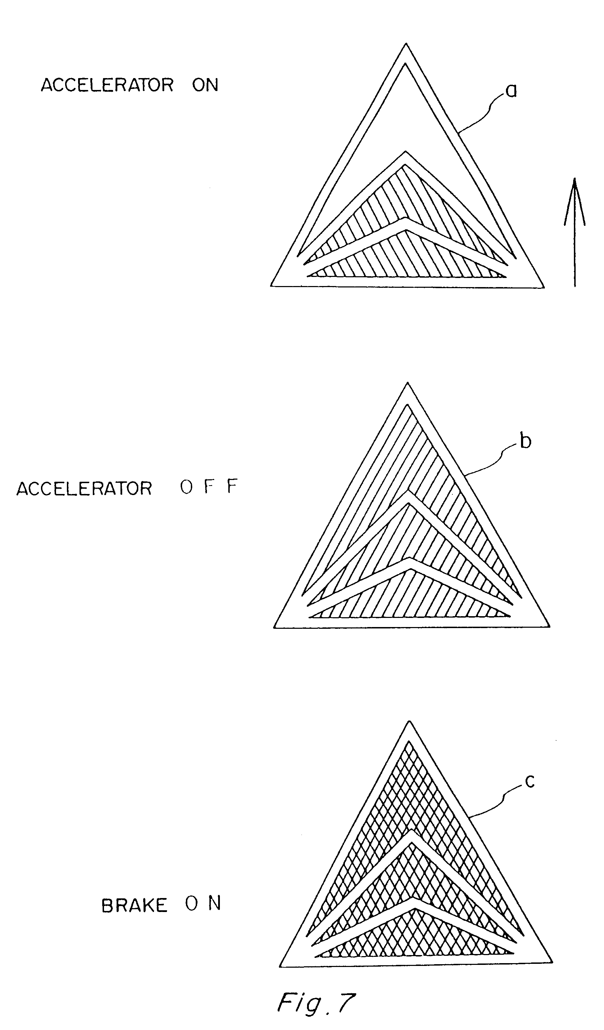

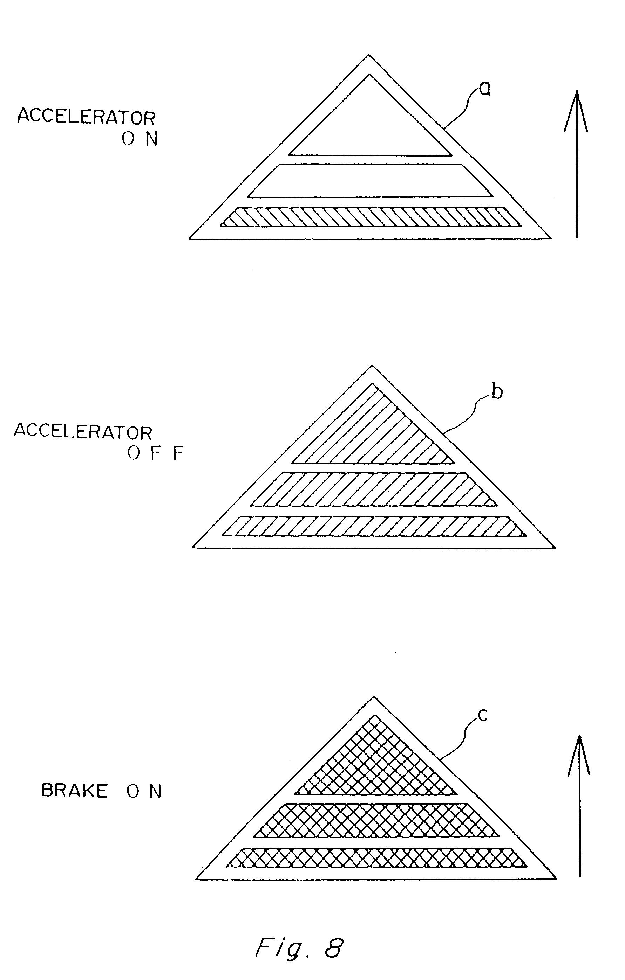

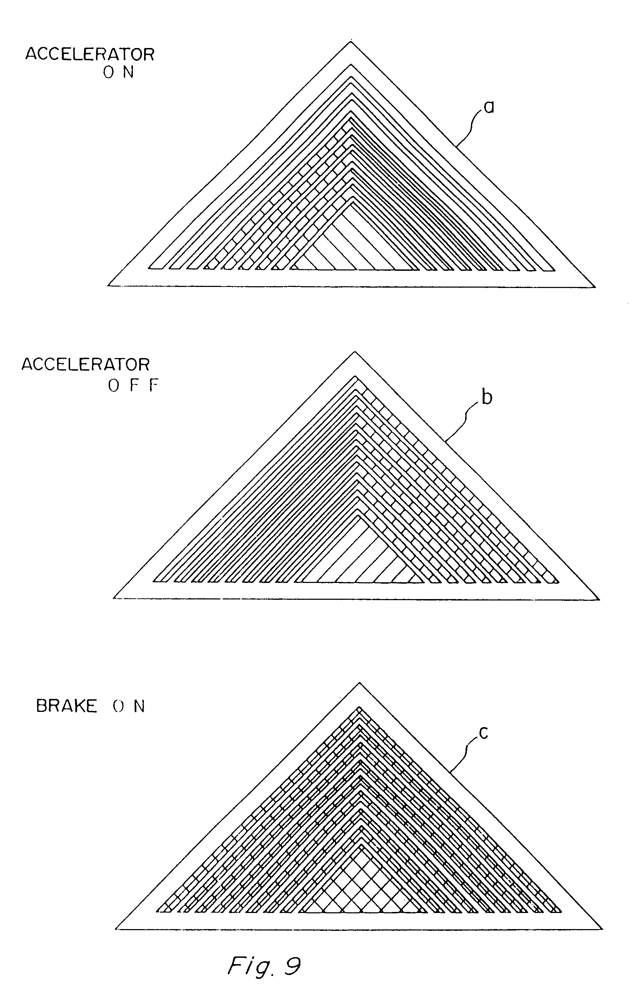

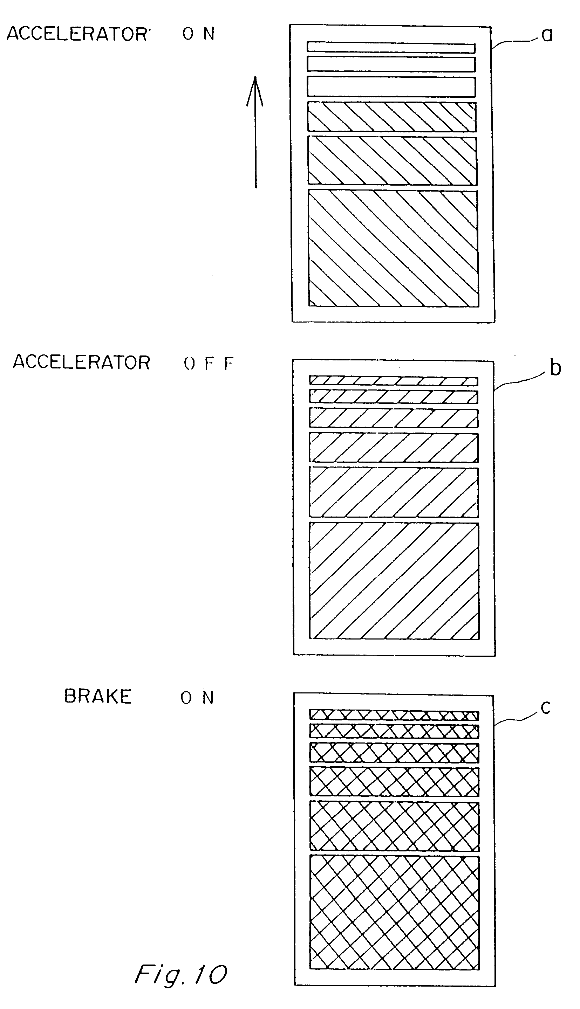

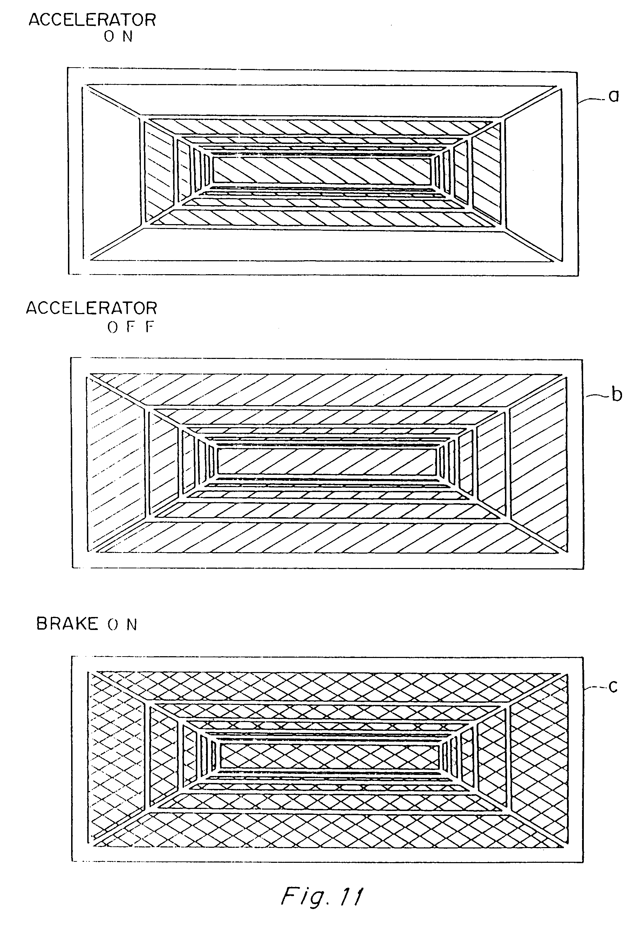

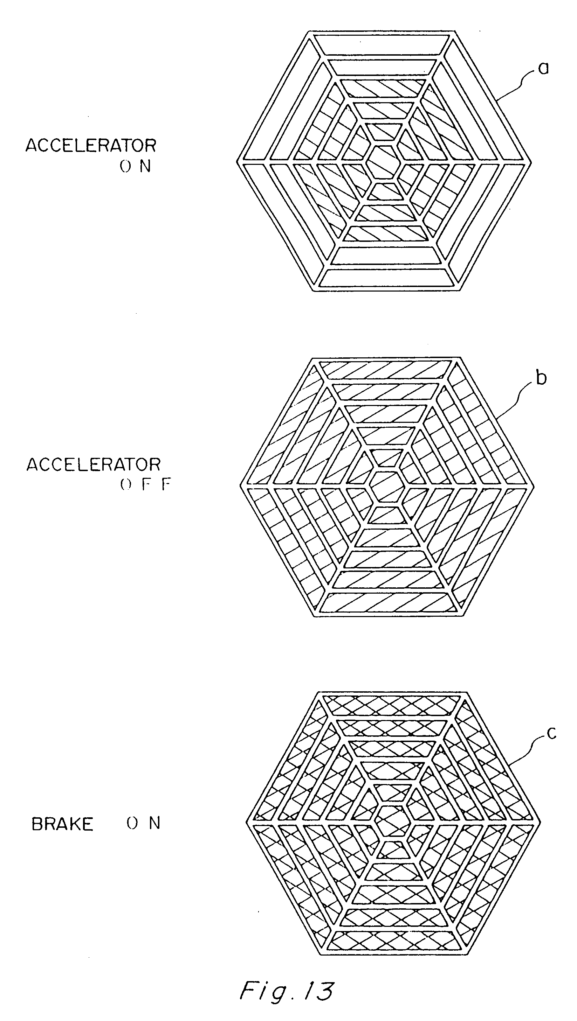

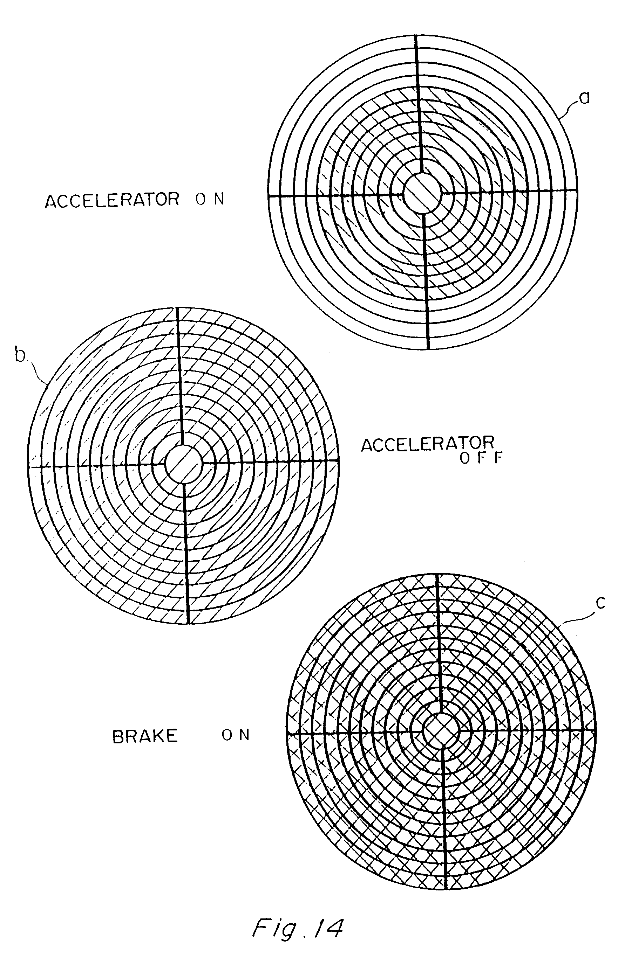

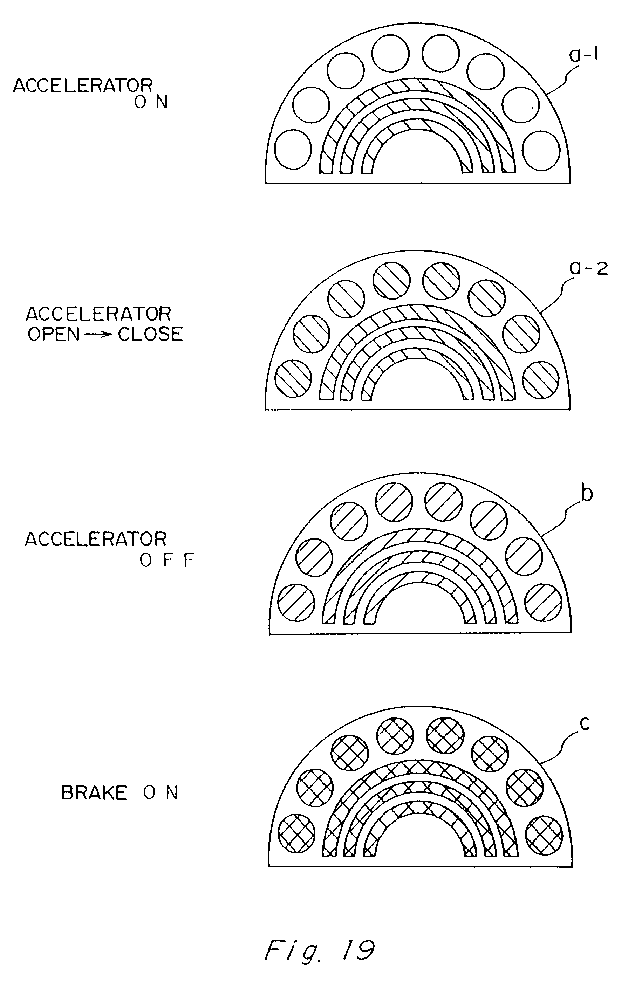

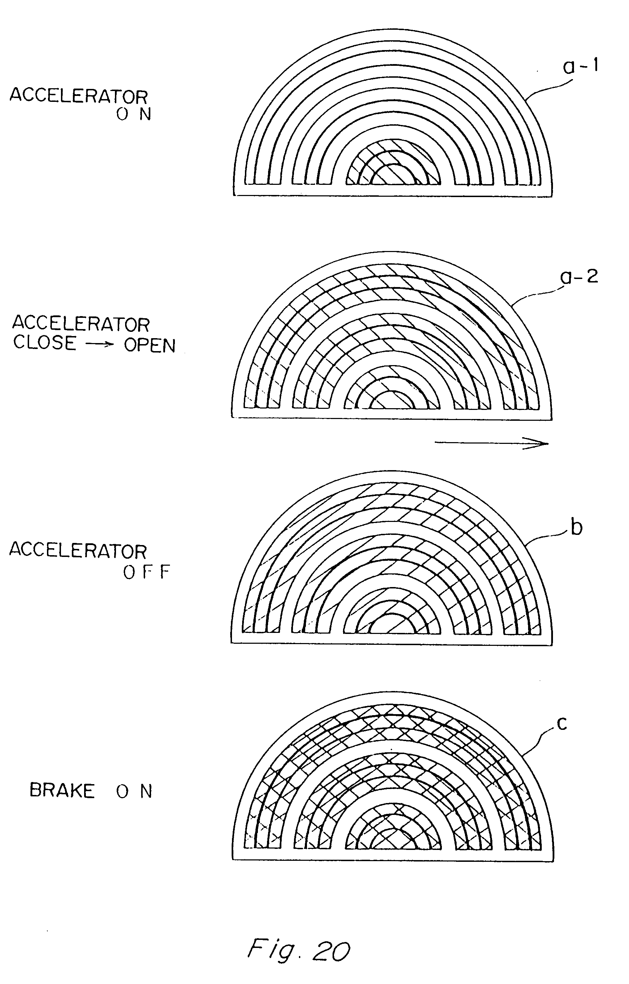

Figures 7 to 20 show plan views of important portions of a display which can be used for an accelerator pedal operation amount display apparatus. The light emitting apparatus is formed by arranging a plurality of light emitting element on a substrate having a shape corresponding to that of the display shown in Figures 7 to 20 so that the light emitting element produces green, yellow, or red light and every adjacent element produces a different color. The basic element is received in a body comprising a metal material, a plastic material and a wooden material and so on. One surface of the body can be thin so that the light emitting surface formed by the light emitting element can be observed externally.

Where the apparatus is constructed as recited above, various colors can be displayed by using a display portion selected from a to c or from a to d, as shown in Figures 7 to 20. The display portion shown in a to c or in a to d in Figure 7 may be formed of a single color light emitting element and then arranged in a vertical or horizontal direction to perform a display.

A plurality of light emitting elements seen from said display portion can be directly exposed, but if necessary an opaque plate on which a pattern defining line is drawn may be used to hide the light emitting element.

As shown in Figures 7 to 14, the display shown by 'a' indicates the amount of operation of the accelerator. In this case, it is preferable to perform a display of a green or blue color as shown by hatching lines. The display shown by 'b' indicates the state in which the accelerator is not yet depressed. In this case, the entire display portion displays a uniform yellow or orange color. The display shown by 'c' indicates the state in which the brake is operated. In this case, the entire display portion displays a uniform red color.

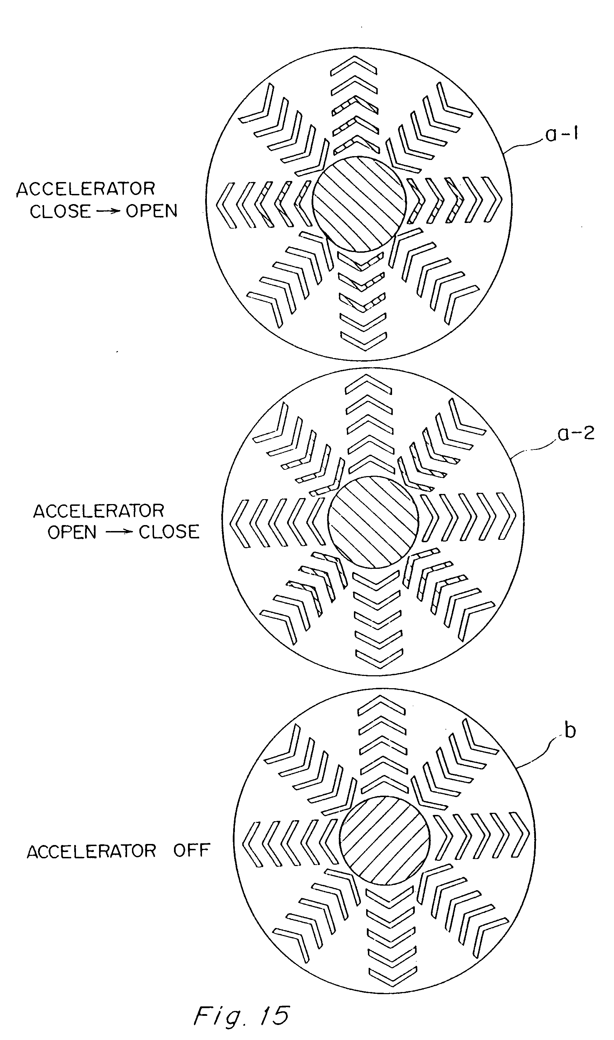

The display portion a-1 in Figure 15 designates a situation in which the accelerator pedal is gradually fully depressed. Display portion a-2 designates a situation in which the accelerator is gradually returned from the fully depressed state to the original state. The color used in display portion a-2 is green or blue. Display state b is the same as the previously described display state b, but the central portion is displayed in yellow and the portion designated by the arrows is turned off.

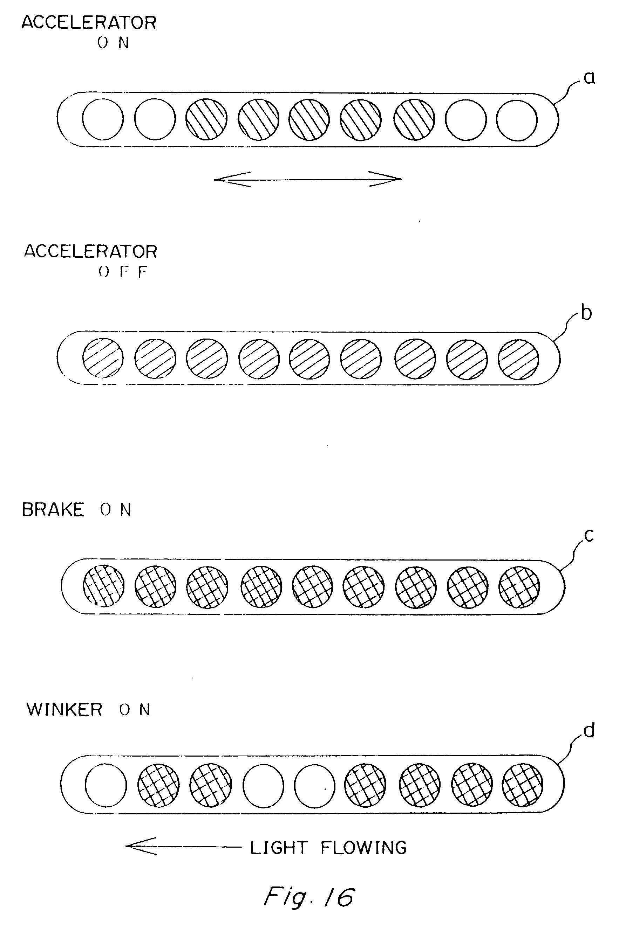

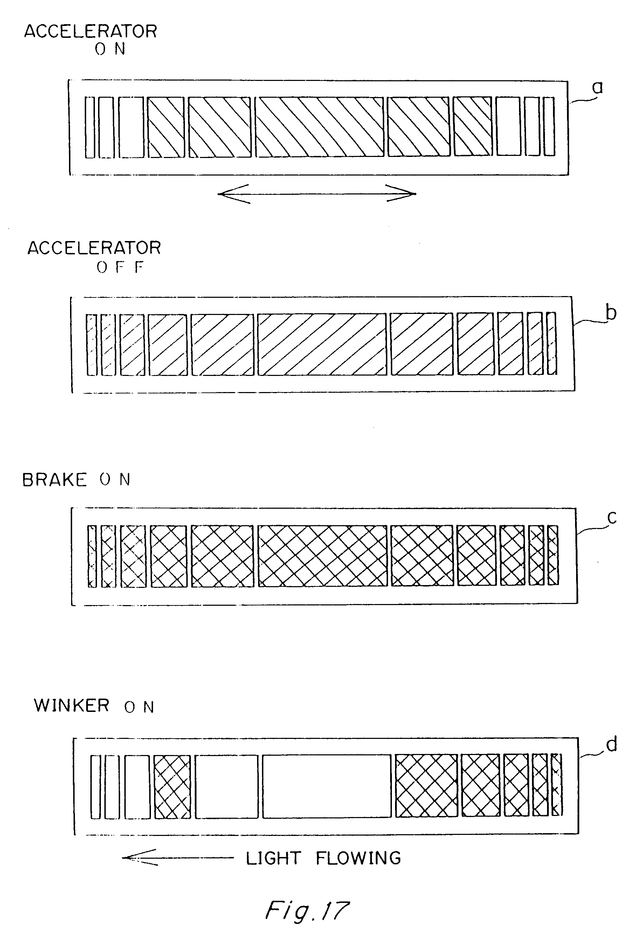

Display portions a to c in Figures 16 and 17 are the same as the already described display portions a to c. Display d indicates an operation of an winker displayed by a driving source, not shown. The display portion moves from right to left if it flows and the color of the display portion is red.

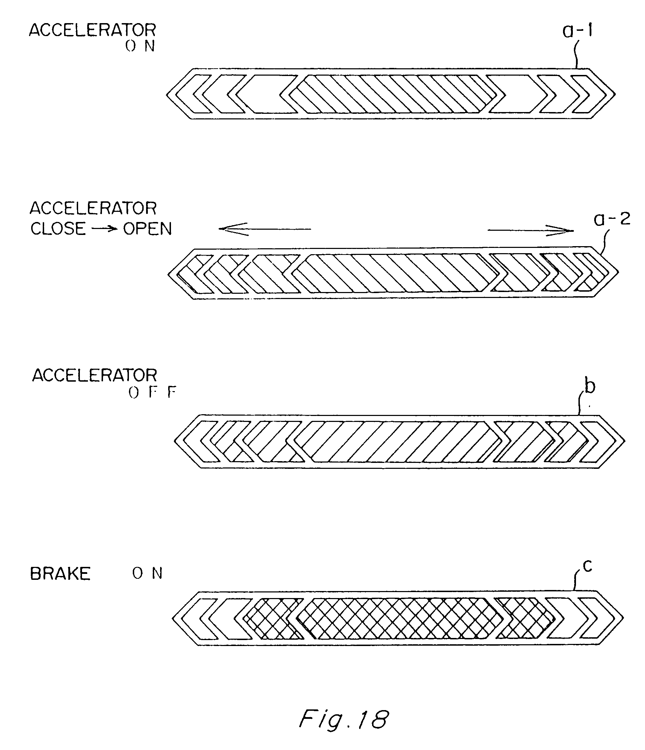

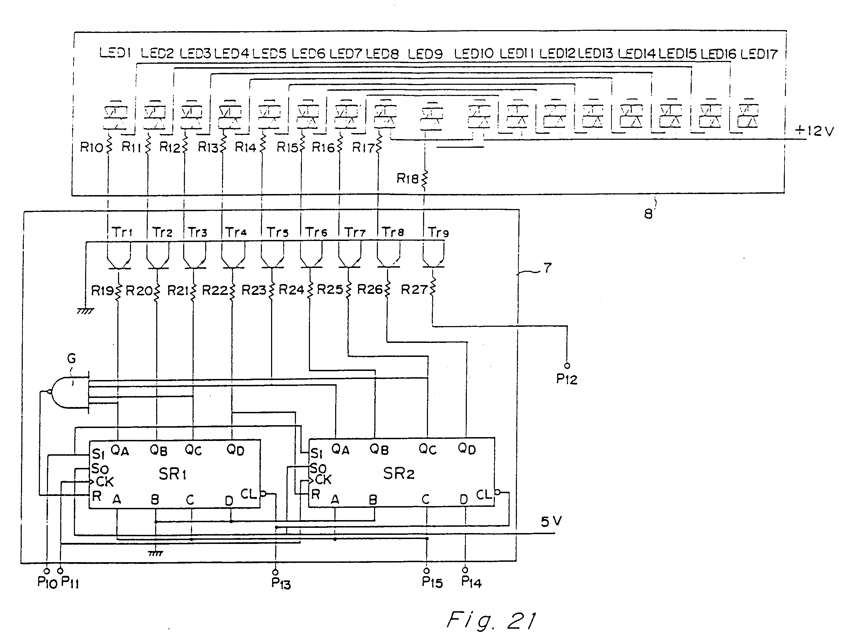

The display portion a-1 shown in Figures 18 to 20 designates the manner in which the accelerator is partially depressed. The color is green or blue. Display portions b and c are the same as former display portions b and c. The accelerator operation amount display apparatus constructed as recited above and operation of the display will be explained as follows. In a state in which the accelerator pedal of the automobile on which the accelerator operation amount display apparatus is mounted is fully depressed, all the green LEDs 1 to 17 are turned on except for LED 9 in Figure 4. This explanation is made by referring to Figure 18, where the display is performed as shown by display a-2. When the accelerator pedal is partially depressed, all the LEDs are not turned on, but LEDs 8 and 10 shown in Figure 4, for example, are turned on. Then, display is performed as shown by display portion a-1 by in Figure 18. When the accelerator pedal is not depressed, for example, a yellow LED 9 is turned on. Then display is performed as shown by display portion b. When LED9 turns other LEDs on, namely, when the accelerator pedal is depressed, the input port P18 is turned to "L" level so that the LED is turned off. In the embodiment, the light emitting element is formed of an LED, but it may be formed of a white-heat electric valve. In Figure 4, only one or two light emitting elements driven by transistors TR1 to TR9 of driver 7 are shown, but with the displays shown in Figures 7 to 20, a parallel connection, for example, is adopted to increase the number of light emitting diodes required for the element to achieve an appropriate number. Figure 21 shows the detailed structure of an example of a driver 7 and a display a for use in a display apparatus which is different in type from the previously explained display apparatus. In Figure 21, driver 7 comprises a ring counter for combining an amplifier comprising transistors Tr1 to Tr8, resettable shift registors SR1 and SR2, and the gate of the nand operation. The bases of respective transistor are connected to parallel output terminals 9a to 9d of the shift registors SR1 and SR2 and base of transistor TR9 is connected to the output port P12 of MPU1 through registor R27. The emitter of respective transistors are commonly grounded and the collectors of transistors TR1 to TR8 are connected to one of the terminals of corresponding light emitting elements LED1 to LED8 through corresponding registors R10 to R17. Therefore, the other terminals of light emitting elements LED1 to LED8 are connected to the plus terminal of the power source (not shown) through corresponding light emitting elements LED10 to LED17. The collector of transistor TR9 is connected to the plus terminal of the power source through light emitting element LED9.

Pre-set terminals a to d of shift registors SR1 and SR2 are determined by the left bit to be "H" and then "L" and "H" is alternatively repeated in a right direction. In order to perform the later described operation, pre-set terminals a and b of shift resistors SR1 and SR2 are connected to output port P15 of MPU1 and the pre-set terminal d of shift registor SR2 is connected to the output port P14 of MPU1. One S0 of the mode selection terminal is connected to the plus power terminal (5V) and the other S1 of the terminal of the mode selection terminals is connected to the output port P10 of the MPU1. The clock input terminal CK and clear terminal CL are connected to output port P11 and P13, respectively, of the MPU1. The parallel output terminal Q0 of shift registor SR1 is connected to the serial input terminal R of shift registor SR2, and parallel output terminals QA and QC or shift registors SR1 and SR2 are input to the gate G and the output is connected to the serial input terminal R of shift registor SR1. This amplifier is provided between output ports P0, P11, P13, P14 and P15 and the shift registors.

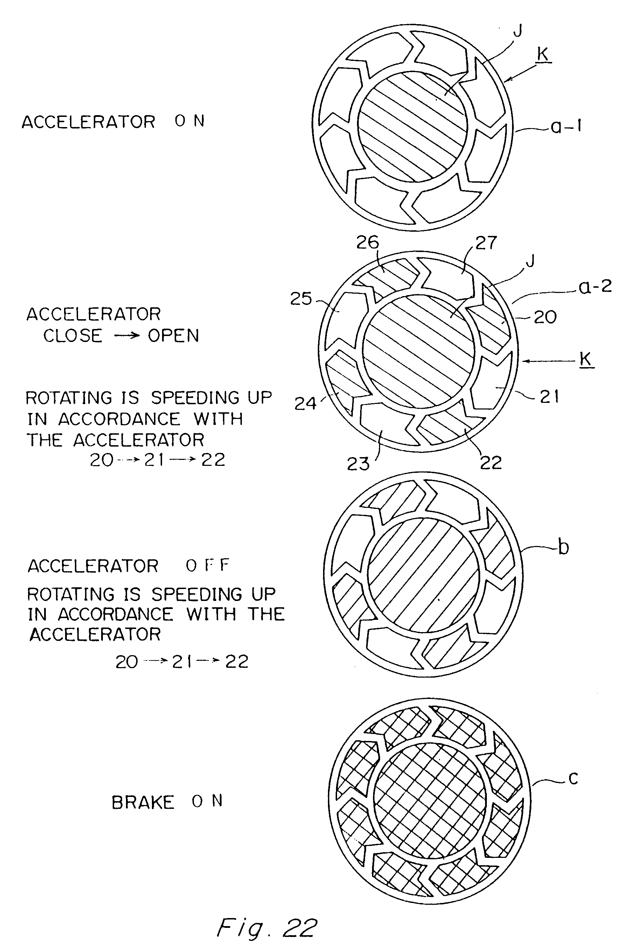

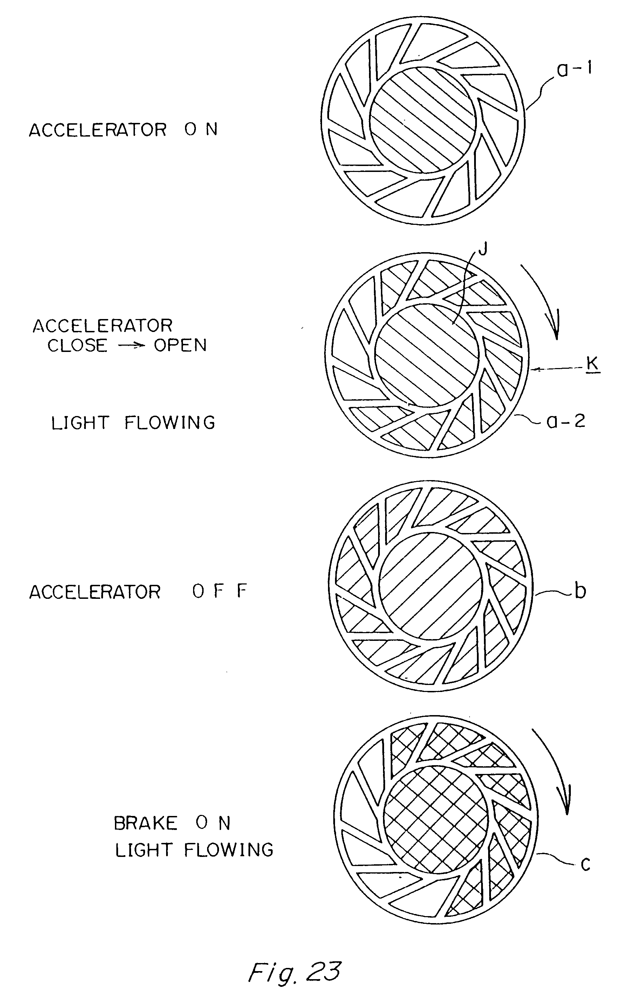

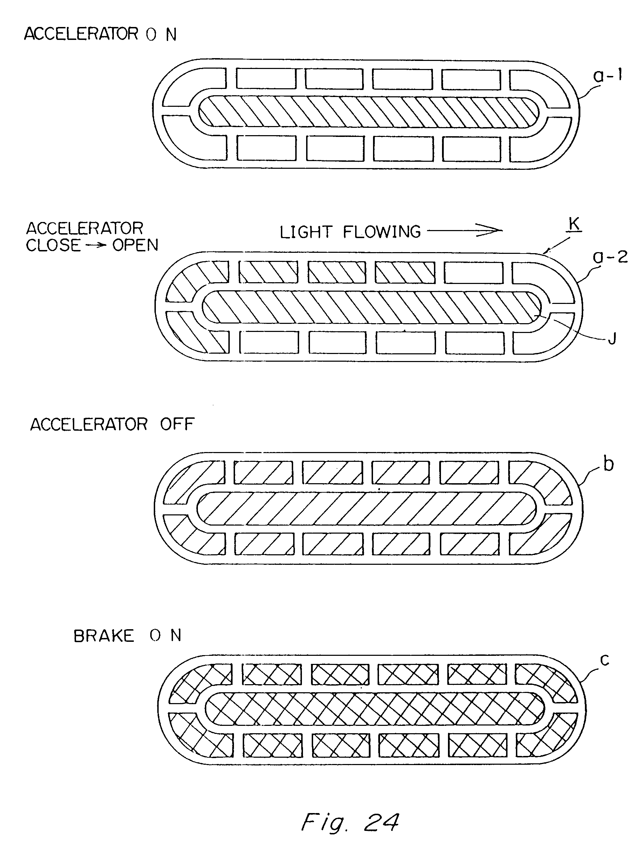

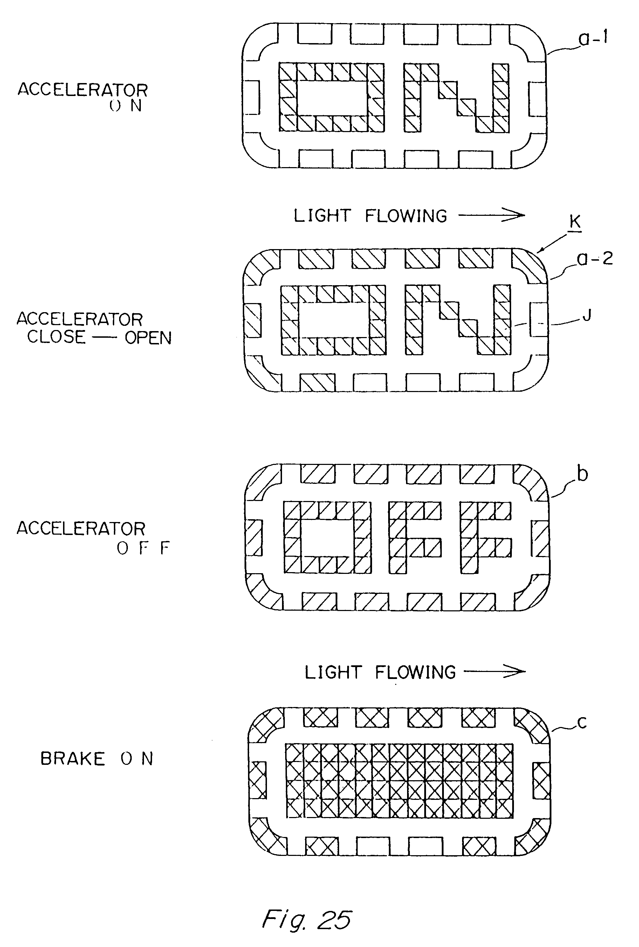

Figures 22 to 25 are plan views designating the same portions of different types of display. The display body shown in respective figures comprises a central display unit J and the outer field display unit K surrounding the central display unit J. Outer field display unit K is formed by making cylindrical defined display portions 20 to 27 (Figure 22) continuous. The light emitting element is formed by arranging a plurality of light emitting elements such as green, yellow and red light emitting elements on a substrate whose shape corresponds to the shape of the display shown in respective figures so that the adjacent light emitting elements are of different colors.
The substrate is provided in a case formed of a metal material or wood, for example, and a light emitting surface formed by the light emitting element can be observed externally from the side of the case. As constructed above, the same display portion selected from one of the display portions (a-1, a-2) to c shown in Figures 22 to 25 can perform a various kinds of color display. The display portions a (a-1, a-2) to c can be formed in the same way by a single-color light-emitting element as described above, and may be arranged horizontally or vertically to be displayed separately. A plurality of light emitting elements which can be observed from the display portion may be exposed directly. By providing a faced plate such as an opaque plate for defining a line if necessary, the light emitting element may be hidden.

In the display as constructed above, the light emitting element for displaying the amount of accelerator operation, selected from the light emitting element belonging to the defined display portions, is connected and driven by transistors Tr 1 to Tr 7 (Figure 21). The light emitting element for representing the amount of accelerator operation, selected from the light emitting element of the central display unit J, is connected so that it is displayed through the transistor Tr8.

In Figures 22 to 25, display unit a-1 represents a state in which the accelerator pedal is slightly depressed and display unit a-2 represents a state in which the accelerator pedal is depressed more deeply than in display unit a-1. The reason why the arrow is displayed, is that the outer wheel display unit K rotates more quickly when the accelerator pedal is depressed more deeply.

Display unit b designates a state in which the accelerator is not operated, namely, a state in which power is not applied to the acceleratpr pedal. In the display mode a-2, the portions which can be observed when the rotation is stopped are displayed in yellow or orange color. Display portion c designates, by a driving source, a state in which the brake is operated, and the entire display is uniformly red. As in the circuit diagram in Figure 21, the other driving source can enable a red color rotation display in association with an operation of the brake pedal in the same way as the amount of the operation of the accelerator pedal is displayed. The light emitting element relating to this manner of display is performed by transistor Tr9.

Where the state of the input ports of comparator 5 is changed to "H" level, MPU1 determines which of ports P1 to P9 is turned to "H" level, and determines the frequency of the clock supplied to shift registers SR1 and SR2 from output port P11 outputted to driver 7, and the signal of the frequency is supplied to the clock input terminal CK of shift registers SR1 and SR2.

The signal to be compared, which is input to comparator 5, is determined to be in a state in which the sensor 3 is fixed under the accelerator pedal such that the frequency of the driving signal of the sensor of the resonance circuit is previously determined. Thus, the signal to be compared becomes a maximum when the accelerator pedal is not depressed. When the accelerator pedal is fully depressed, the difference between the voltage of the signal to be compared and the maximum voltage is obtained. In this embodiment the voltage is divided into 9 steps and resistors R0 to R9 of contoller 6 are determined so that respective voltages are supplied to comparator 5 as reference voltages. For example, where the maximum voltage is 5V and the voltage of the signal to be compared when the accelerator pedal is fully depressed is 0.6V, the difference between the maximum voltage and the voltage of the signal to be compared is 4.4V. Accordingly, by the operation of output ports P1 to P9, voltages of 4.4V, 3.91V, 3.42V, 2.93V, 2.44V, 1.96V, 0.98V and 0.49V are supplied sequentially to the comparator 5 as reference voltages. If the voltage corresponding to the state in which the accelerator pedal is most deeply depressed, i.e., 0.6V is supplied as the signal to be compared, the output of the comparator 5 becomes "H" level when the output port P9 is in "H" level, i.e., when the reference voltage of the comparator 5 is 0.49V. Therefore, MPU1 supplies a shift pulse of the highest frequency from the output port P11 to the shift register of the driver 7. Immediately before this timing, MPU1 determines the output port P15 at "H" level and the output port P15 at "L" level and thereafter turns the output port P11 to "H" level. Thus, the left end bits of the parallel outputs of shift registers SR1 and SR2 are determined as "H". Thus, "L" and "H" are alternatively repeated in the rightward direction. Therefore, when the accelerator pedal is fully depressed, the display portion a-2 in Figures 22 to 25, the state in which the display portion a-2 rotates at the maximum speed, can be observed. When the amount of depression of the accelerator pedal is reduced to less than the state in which the accelerator pedal is fully depressed, the frequency of the shift pulse outputted from the output port P11 is lowered. As a result, the rotation speed of the external wheel display portion K is decreased. When the accelerator pedal is depressed a little bit, and 4.2V is supplied as the signal to be compared, namely, the reference voltage of comparator 5 is 3.91V, the output of comparator 5 becomes "H" level. Therefore, MPU1 produces a control signal of "L" level from the output port to the clear terminal of shift registers SR1 and SR2, thereby clearing the parallel state of the shift registers SR1 and SR2. Next, the output port P14 is turned to "H" level, then the output port P15 is set to "L" level and thereafter one shot pulse of "H" level is transmitted from output port P11 to mode selection terminal S1. As a result, only transistor Tr8 becomes conductive and the shift pulse is not supplied to output port P11. Accordingly, in this state, only central display unit J is displayed as shown in the portion in Figure 22 to Figure 25. Display portion a-1 is shown in Figures 22 to 25. When the accelerator pedal is not depressed, output port P14 is turned to "L" level and output port P12 is turned to "H" level. Thus, for example, a yellow LED9 is turned on, thereby performing a display as shown in display portion b. Output port P11 is turned to "L" level, so that LED9 is not extinguished, whereas an LED is turned on when the accellerator pedal is depressed. In this embodiment, the LED uses a light emitting element, but the light emitting element may be of the white-heat electric type.

In Figure 21, only one or two light emitting elements driven by transistors Tr1 to Tr9 of the driver 7 are shown for respective transistors. In this case, the display elements shown in Figures 22 to 25 are driven, the number of light emitting elements for respective transistors is increased, for example, by a parallel connection. A circuit diagram of the driver and the display shown in Figure 21 shows a ring counter composed of two ICs, but it may be formed of a ring counter comprising three ICs and the state of the pre-set terminal can be adequately changed in accordance with the manner of display. The output port may be operated by software and may be subjected to a rotation display without using a ring counter.

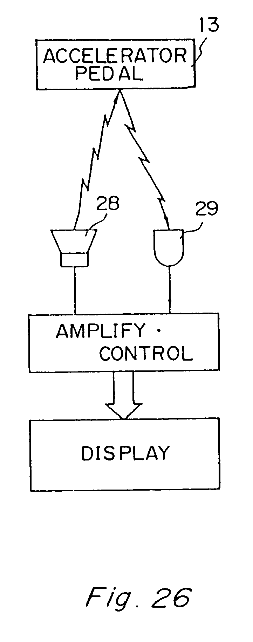

Sensor 3 may be formed of various kinds of circuit in addition to the parallel oscillation circuit as described above. The reciprocating movement of the accelerator pedal is converted to a rotation movement through a rack and pinion and the rotation axis of the rotary encoder is moved, together with the rotation of the pinion and the digital output designating the state of the rotation displacement is read by the MPU through an interface, thereby controlling display 8. As shown in Figure 26, an oscillation body 28, such as a speaker for producing an ultrasonic sound wave, and an oscillation sensing body 29, such as a microphone for receiving the ultrasonic waves reflected from the under surface of the accelerator pedal 13, are provided under accelerator pedal 13. The strength and weakness of the reflected ultrasonic wave in accordance with a contact and operation of the accelerator pedal with and from oscillation body 28 and oscillaltion sensing body 29 is detected by oscillation sensing body 29 while a car is driven and, based on the detection, MPU1 may control display 8 as described above. Instead of oscillation body 28 and oscillation sensing body 29 a reflection type photo interrupter may be used. In this case, a white reflecting paper is attached to the under parts of the accelerator pedal 13 or white paint is coated on the under part of the accelerator pedal 13 and the reflected light is detected by a reflection type photo interrupter. Further, an lastic device such as a spring may be attached to the accelerator pedal. In this case, spring pressure is transmitted to a pressure sensor such as a strain gage in accordance with the pressure caused by the operation of the accelerator pedal and display 8 may be controlled based on the output of the pressure sensor, as described above.

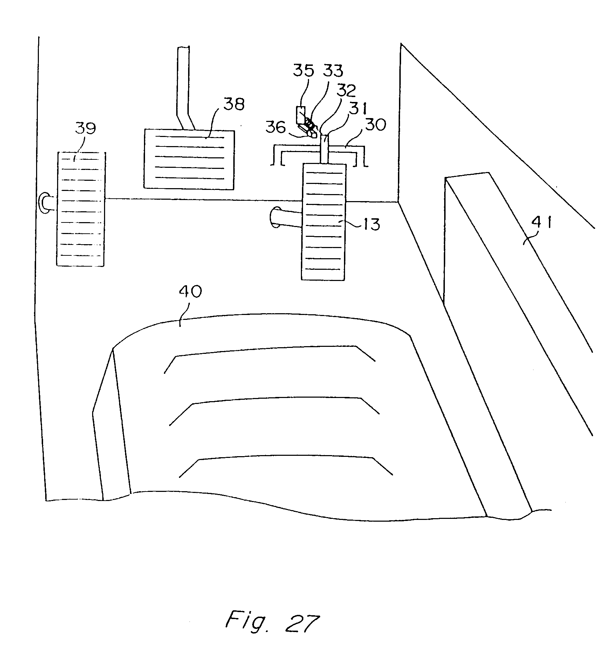

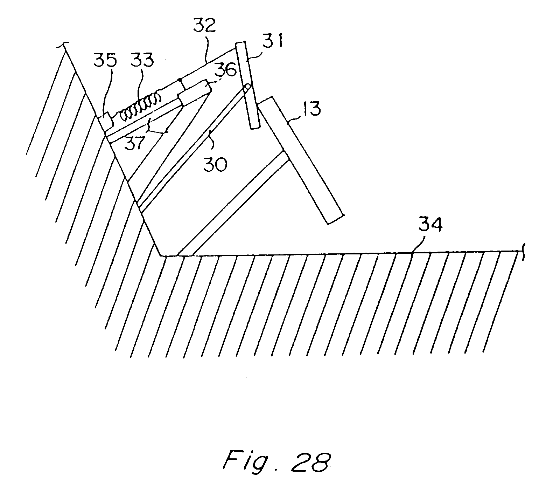

Figure 27 is a schematic view of another structure for detecting the amount of depression of the accelerator and Figure 28 is a schematic view of the main part thereof. Swinging plate 31 pivotted at an end of supporting member 30 is provided near accelerator pedal 13 and the under part of swinging plate 31 is positioned so that it opposes against the upper end of the lower surface of the accelerator pedal is. On the other hand, thin wire rope 32 is attached to the end of swinging plate 31 and spring member 33 is provided to the other end of wire rope 32. The other end of the spring member 33 is connected to engaging member 35 fixed to the vehicle body 34. A slidable variable resistor 36 is fixed near the connection portion with spring member 33 of wire rope 32 by supporting member 37, and the adjustment rod of variable resistor 36 is fixed to wire rope 32.

When accelerator pedal 13 is depressed, the engaging portion of swinging plate 31 is pressed by the upper end portion of accelerator pedal 13 and swinging plate 31 is rotationally displaced with the pivotting portion as the center of the rotation. As a result, the upper end of swinging plate 31 is displaced such that its upper end is raised and, following this displacement, wire rope 32 is moved. Therefore, the adjustment rod of variable resistor 36 is displaced in accordance with the movement of the wire rope and the value of resistance 3 is varied. In this structure, a sliding type variable resistor is used but a rotation type variable resistor may be used in combination with a structure in which the reciprocating movement is converted to a rotation movement by a structure such as a rack and pinion. In Figure 27, brake pedal 38 is provided on the left side of accelerator pedal 13 and the left brake pedal 38 clutch pedal 39 is provided. Seat 40 is shown in front of, accelerator pedal 13, brake pedal 38 and clutch pedal 39, and door pocket 41 is shown on the right side of the seat 40.

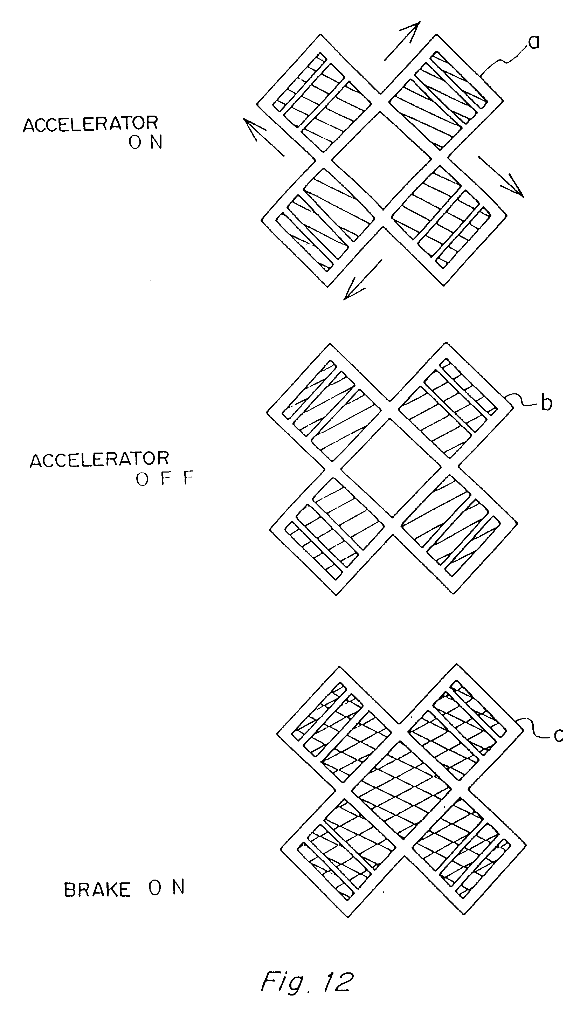

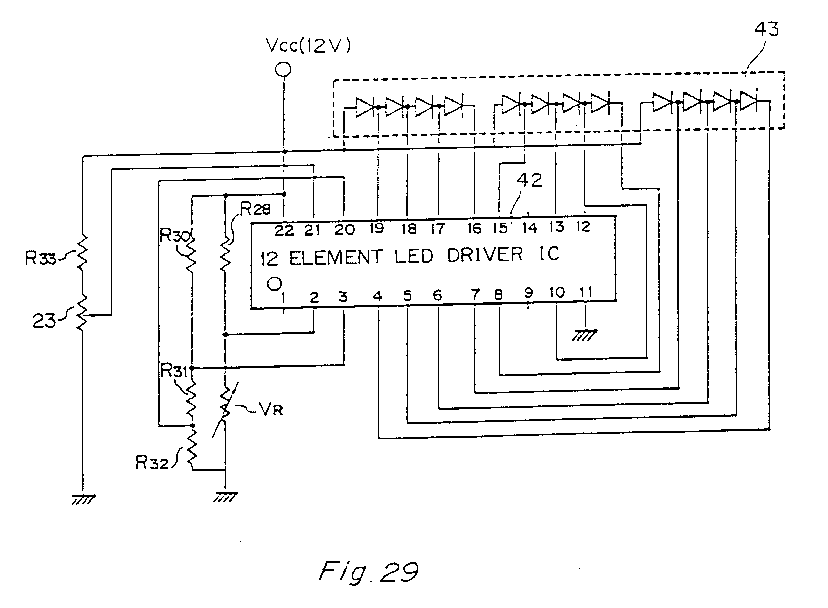

The electrical circuit connected to the variable resistor 36 as a sensor is almost same as that shown in Figures 1, 3 and 4, or is obtained by modifying the electrical circuit shown in Figures 1, 3 and 4. In this embodiment, the electronic circuit shown in Figure 29 is used. In Figure 29, 12 is an LED driver IC (called driven IC hereinafter), 42 is an integrally provided with comparator. Matrix circuit and element LED driver IC is an IC for a bar graph display and is sold on a market to replace a VU meter of an audio amplifier (for example, this IC may be an IR-2433 manufactured by Sharp Corporation). The 12 element LED driver 42 shown in Figure 29 comprises 12 elements, but, by performing a cascade connection of driver IC 42, many more elements may be driven in a precise manner. The output of driver IC 42 is connected to display 43 equipped with 12 LEDs. The second pin divides the power source Vcc by using resistor R28 and variable resistor V_{R} so that the maximum value of the reference voltage of the installed comparator is provided through the second pin. The 20th pin divides the power source Vcc by using resistors R30, R31 and R32 so that the minimum value of the reference voltage of the comparator is supplied and the divided value of the voltage is set in accordance with the voltage drop of resistors R30 to R32. By setting the maximum and minimum values of reference voltage, voltages between the maximum and minimum values are divided into 12 and are supplied to respective installed comparators. The third pin is for controlling the current flowing through the LED of display 43 and for adjusting the current by appropriately determining the values of resistors R30, R31 and R32. It is preferable for LEDs to be constructed so that their left ends are yellow and their other ends are green when they emit light.

Although not shown in Figures 27 and 28, the voltage power source Vcc is supplied to variable resistor 36 through resistor R33, as shown in Figure 29. The voltage, which varies in accordance with the movement of the adjustment rod, is outputted from the sliding terminal and the output is supplied to the 21st terminal of driver IC 42. In accordance with the variation of output voltage from low level to high level, the emitting light is extended from the right to the left end of display portion 43. If display portion 43 is divided into two parts comprising a left part and a right part, the LEDs on both sides are driven in units of two, then light is emitted toward both ends from the center of display portion 43 in accordance with the movement of the accelerator pedal when the accelerator pedal is depressed more deeply. When such structure is used, and if the driving power of the LED is lacking, the LED may be driven after the driving power is amplified by an amplifying element such as a transistor. Further, the light emitting apparatus may be formed so that it can be seen from a remote distance, by arranging 10 units of a single LED, thereby producing a high light intensity. In this case, the driving power may be amplified by an amplifying element.

The above explanation is related to the apparatus for displaying the amount of operation of the accelerator. A structure similar to that of the above embodiment may be provided on the brake pedal side and, for example, a red light may be emitted in accordance with the amount of the depression of the brake pedal, and such display may be pionrovided in parallel with the accelerator apparatus, as described above.

The structures shown in Figures 1 to 6 and 26 to 29 may be applied to the inside-vehicle display apparatus for enabling a driver or passenger, within the automobile to detect the status of the driving with ease.

Detecting the amount of the depression of the brake pedal may be structured in the same way in which the amount of depression of the accelerator pedal is detected. Instead of sensor 3 formed by a parallel oscillating circuit, an oscillation sensing circuit such as a microphone or a pick-up may be provided in an appropriate portion of the engine cavity, and the output of the oscillation sensor is input to detecting circuit 4. In this case, naturally, it is unnecessary to provide a rectangular wave to the sensor from the sensor driving unit. Accordingly, formation of the wave is not necessary. The operation is very similar to the operation in which the amount of operation is displayed by detecting the amount of depression of the accelerator pedal or beake pedal. Inside-vehicle display apparatus is realized by combining at least one, or two or all of the display based on the amount of depression of the accelerator pedal. The display of the amount of depression of the pedal and the display of the number of rotations of the engine may be provided within an automobile, for example, in a position suitable for seeing from the rear seat of a taxi cab, or in a single portion, or in plural portions which are easily seen by the passengers of a bus.

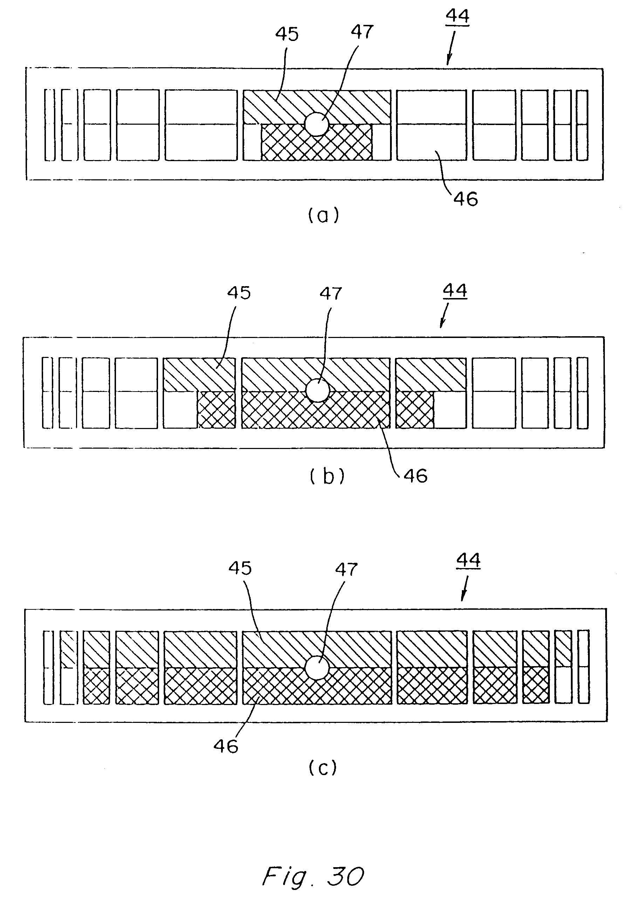

Figure 30 shows a plan view of the main part of one example of a display apparatus equipped with an inside-car display apparatus. Display body 44 is formed into a flat parallelopiped in which a printed board is inserted. This printed board has a number of light emitting elements, such as high intensity type LEDs arranged on it. The upper half of display 44 is for display portion 45 for displaying the amount of depression of the accelerator and upper and lower halves of display 44 are for display unit 46 for displaying the number of rotations of the engine. A circular area is provided at the center of display 44 and this area is for display unit 47 for displaying brake pedal operation display unit 47 which emits a light when the brake pedal is depressed. The light emitting elements provided on respective displays are connected to the driver shown in Figure 4. Driver IC 42 shown in Figure 29 is provided at a double structure so that light emission is extended to the left and right sides of display body 44. Then the output of driver IC 42 is amplified by an amplifying element such as a transistor, and thereafter the display is driven. The emission is shifted in the sequence shown by Figure 30 (a), (b) and (c) and light emission is expanded in the left and right directions of the display 44 in accordance with the increase in the number of rotations of the engine. Although not shown in Figure 30, a switch, which is closed when the brake pedal is stepped, on is provided near the brake pedal and the light emitting element is turned on when the switch is closed. As described above, the driving state, such as the state of operation of the brake pedal, the amount of depression of the accelerator or the number of rotations of the engine, is shown within an automobile so that persons other than the driver can understand the driving and running status. Therefore, when the car runs at a high speed, the person can grasp a handle or back support or otherwise prepare for a danger.

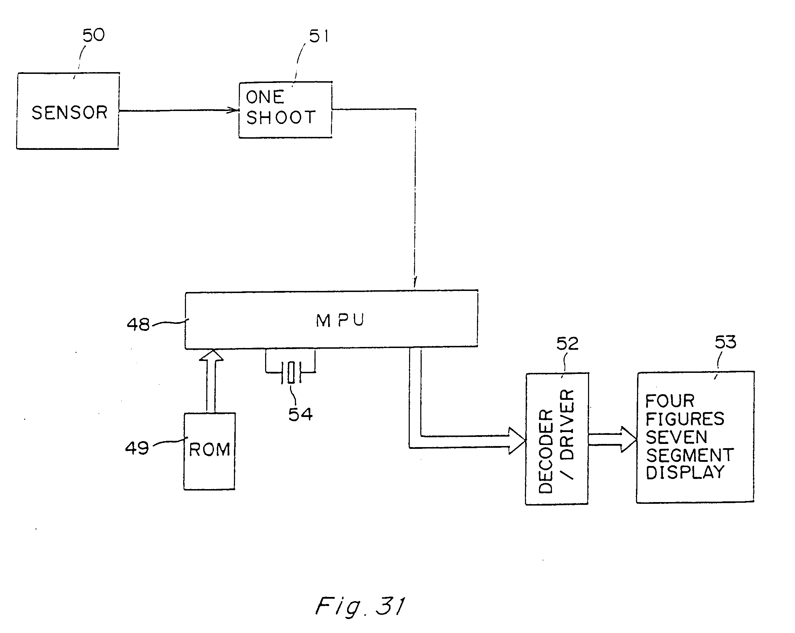

Figure 31 is a block diagram of a display apparatus for displaying the number of rotations of the engine outside the automobile. Micro processor unit (which is called MPU hereinafter) 48 comprises a so-called one-chip micro-processor equipped with a CPU, a RAM, a parallel input and output port, a timer and a clock oscillator circuit. The program executed by MPU 48 is written in ROM 49 and ROM 49 is electrically connected to MPU 48, for example, through a data bus and address bus.

The output of sensor 50 for detecting the number of revolutions of the engine is input to one-shot multi-vibrator 51, the output of which is input to an input port of MPU 48.

On the other hand, the output port (16 bits) of MPU1 outputs a signal to decoder/driver 52, the output of which is input to 7-segment display 53 comprising 4 bits. Crystal oscillator 54 is provided for a clock oscillation.

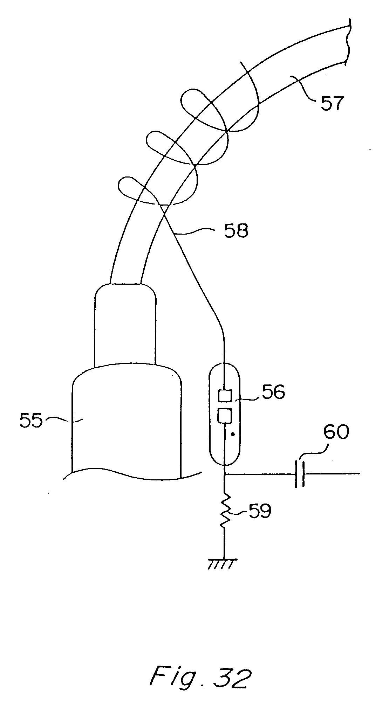

Various kinds of sensor 50 can be used, for example, a neon lamp as shown in Figure 32. In Figure 32, neon lamp 56 is provided close to spark plug 55 and one electrode of neon lamp 56 is connected to a terminal of electric line 58 wound on high-voltage introducing cord 57 connected to spark plug 55. The electrode of neon lamp 56 is connected to a lead wire on one side of condenser 60 and resistor 59 and the lead wire on the other side of resistor 59 is grounded. The lead wires on the other side of condenser 60 and resistor 59 are connected to the other electrode of neon lamp 56 and the leand wire on the other side of resistor 59 is grounded. The lead wire on the other side of condenser 60 is connected to one-shot multi-vibrator 51, not shown in Figure 32, through a lead wire and supplies a trigger signal to one-shot multi-vibrator 51. As means for detecting the number of rotations of the engine, an oscillation sensing device such as a microphone or a pickup is provided at an appropriate location in the engine cavity and the output of the oscillation sensing device is rectified, smoothed and further amplified. It is the input to the A/D converter. The digital numerical valued obtained by the A/D converter is processed by MPU 48 and the number of rotations of the engine can be displayed on 7-segment display 53 comprising 4 bits.

Seven-segment display 53 comprising 4 bits is formed by arranging 4 displays for 7-segment displays the same size as a pack of 20 cigarettes, in an appropriate case. This is provided at the rear of the bonnet of the automobile and when the display is performed, the numerical value can be read from the inside of the following car.

A timer interruption process program for managing the state of the input port in which the output of one-shot multi-vibrator 51 is input is written into ROM 49. When spark plug 55 is sparked, neon lamp 56 is lit, a current flows through resistor 59 and a voltage is supplied to one-shot multi-vibrator 51 through condenser 60 as a trigger signal. As a result, one-shot multi-vibrator 51 outputs a single pulse of a constant width to the input port of MPU 48. When the state of the input port is changed from "L" to "H", the content of the register or the predetermined address in the RAM which operates as a counter is incremented in accordance with the interruption process. The process is repeated, as described above, every time the state of the input port is changed. According to the other interruption process of ROM 49, the content of the register operating at the counter is read out every second and the content obtained by multiplying the output of the counter by 60 is written in a predetermined address of the RAM, and the process of clearing the register is performed.

The CPU within MPU 48 reads the content multiplied by 60 from the RAM by a control of the main program and is converted into BCD, and the content is outputted to the output port. This process is updated every second. The data of the number of rotations of the engine outputted to the output port is decoded by decoder/driver 52 and input to 7-segment display 53 comprising 4 digits. Therefore, respective segments are driven and the number of rotations corresponding to the data of the number of rotations is displayed on 7-segment display 53 comprising 4 digits.

The number of rotations of the engine is displayed outside the automobile by using a structure for designating the amount of operation shown in Figures 1, 3 and 4 without being modified. In this case, as a sensor for detecting the number of rotations of the engine, an oscillation sensing device such as a microphone and pickup is provided in an appropriate position of the engine cavity and the output of the oscillation sensing sensor is input to the detecting circuit for performing a rectification, smoothing and direct current amplification and is displayed in the same manner as the amount of operation of the accelerator.

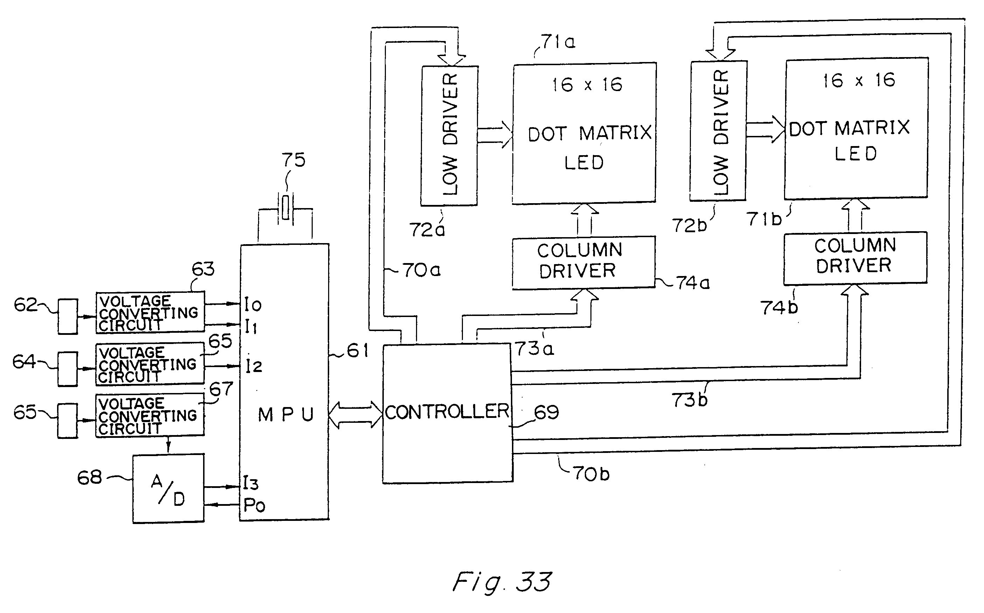

Figure 33 is a block diagram showing the main structure of an apparatus for displaying the operation of a vehicle by displaying the actual movement of the vehicle or a pedal depression state in accordance with the current situation.

In Figure 33, MPU (micro processor unit) 61 comprises a micro-computer equipped with a CPU, a ROM, a RAM, a parallel input and output port, a timer and a clock oscillating circuit. The program executed by the CPU and is provided in MPU 61 is written in the ROM.

The detection output of acceleration detecting signal 22 is input to voltage converting circuit 63 and voltage converting circuit 53 has an acceleration detecting output and a deceleration detecting output, both of which are applied to input ports I0 and I1 of MPU 61. The detection output of brake operation detecting sensor 64 is applied to voltage converting circuit 65 for converting a variation in detected physical quantity into a variation in voltage and the output of voltage converting circuit 65 is applied to input port I2 of MPU 1. The output of running speed detecting sensor 66 for detecting the running speed of the vehicle is input to voltage converting circuit 67 and the output of voltage conversion circuit 67 is applied to an analog input terminal of A/D converting circuit 68. A/C converting circuit 58 outputs the result of a serial digital conversion and this is input to input port I3 of MPU 61. The output port P0 of MPU61 outputs the digital conversion result requesting signal for requesting the A/D converting circuit 68 to output the result of the digital conversion to the input port I3 bit by bit.

On the other hand, the apparatus for displaying the operational status of the vehicle is equipped with controller 69 for controlling the display in accordance with a detection status of acceleration and deceleration detection sensor 62, brake operation detection sensor 64 and running speed detection sensor 66. Controller 69 has two pairs of character generators, an address decoder, an address counter and an oscillating circuit, in addition to an interface circuit (PPI) with MPU 61. Controller 69 may be formed on a substrate by combining an EPROM and a CMOS-IC, but may be formed of an exclusive controller IC which is integral, such as a single IC. Output line 70a of one of the character generators of controller 69 is connected to display (16 x 16 dot matrix LED) 71a through low driver 70a, and the other character generator of controller 69 is connected to display 71b through low driver 72b. The output line 73a of one of the address decoders of controller 69 is connected to display 71a through current driver 74a and the output line 73b of the other address decoder of controller 69 is connected to the display 71b through current driver 74b. In accordance with an operation associated with the address counter and the oscillation circuit, displays 71a and 71b are dynamically driven for every one column, as known in the prior art. MPU 61 is connected to controller 69 through interface circuit (PPI) and the predetermined input and output terminals of the interface circuit are connected to the data bus, control bus and address bus of MPU61.

The acceleration and deceleration detection circuit is not shown in the drawing, but it is formed by providing a pressure sensor such as a strain guage at a terminal of a case comprising plastic, glass, metal and other material and with a cylinder of a rectangular shape. A liquid such as oil or glycerin is pre-sealed in the case and pressure is applied to it. The terminal surface on which the pressure sensor is provided is attached to an appropriate position inside the automobile in the front or rear portion of the traveling direction of the vehicle. Accordingly, during the running period of the vehicle, where acceleration-deceleration detection sensor 62 may be fixed to the front side of the vehicle in the traveling direction, the pressure is decreased upon acceleration and increased upon deceleration. Conversely, when acceleration-deceleration detection sensor 62 may be fixed to the rear portion of the vehicle in the traveling direction, the pressure is increased upon acceleration and decreased upon deceleration.

A bridge circuit, an acceleration detection comparator and a deceleration detection comparator having an on and off operation controlled by the output of the bridge circuit provided in the pressure converting comparator, is input to said input port I0 and I1. Brake operation detection sensor 64 is formed by a switch for performing an opening and closing operation in accordance with the operation of the brake pedal and a comparator is provided in voltage converting circuit 65 connected to the switch. The output of the comparator is input to input port I2.

Running speed detecting sensor 68 comprises a small dynamo provided by combining known mechanical structure so that the dynamo can rotate in accordance with the rotation of the wheel. The output of running speed detection sensor 68 is rectified to a smooth direct current, amplified and thereby converted to the analog voltage, which varies in accordance with the number of rotations of the wheel. This voltage is applied to A/D converting circuit 58. Crystal oscillator 75 is for generating a clock signal of MPU 61.

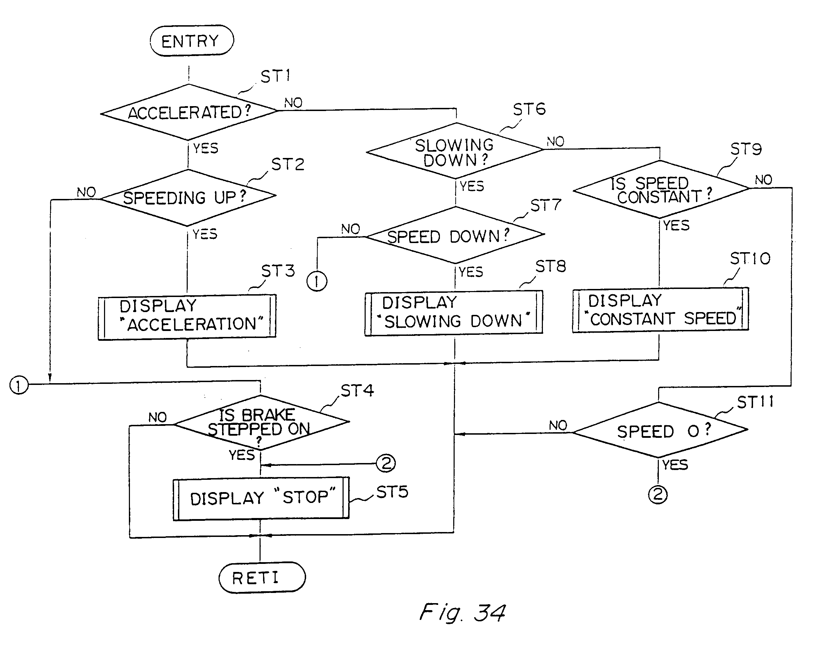

Figure 34 is a flowchart showing the control program relating to the vehicl's operation status display apparatus according to the present invention. The program is being written in the ROM.

The operation will be explained by referring to the flowchart.

The program of the flowchart is executed at predetermined intervals by, for example, a timer interruption process.

In step 1 (ST1), it is judged based on the status of input port I0 or input port I1, whether or not the automobile is now accelerating. If the automobile is accelerating, the process proceeds to step 2 (ST2) and a measurement result of A/D converting circuit 68 is read out. Then, after a short interval of time, the measurement result of A/D converter circuit 68 is again read and it is judged based on the comparison between the two measurement results whether or not the speed of the automobile is now increasing. If the speed is increasing, the process proceeds to step 3 (ST3), thereby controlling so that character "acceleration" is displayed on displays 71a and 71b, and thereafter the interruption process is ended.

If the speed is not increasing, the process proceeds to step 4 (ST4) and the status of the input port I2 is examined to judge whether or not the brake is now being operated. If it is, the process proceeds to step 5 (ST5) and a character "stop" is displayed on displays 71a and 71b and thereafter the interruption process is ended. If the brake is not being operated in step 4 (ST4), nothing is conducted and the interruption process is ended.

If the automobile is not accelerating in step 1 (ST1), the process proceeds to step 6 (ST6) and it is judged based on the status of the input I0 or input I1 whether or not the automobile is decelerating. If it is, the process proceeds to step 7 (ST7). A process similar to that in step 2 (ST2) is then conducted and it is judged whether or not the speed is decreasing. If it is, the process proceeds to step 8 (ST8) and a control is conducted so that a character "deceleration" is displayed on displays 71a and 71b. Then the interruption process is completed. Where the speed is not decreasing in step 7 (ST7), the process proceeds to step 4 (ST4) and performs the above recited operation, and the interruption process is then ended. If the automobile is not decelerating in step 6 (ST6), the process proceeds to step 9 (ST9) and a process similar to those of in ST2 and ST7 is performed, and it is determined whether or not the speed is almost constant. If it is, the process proceeds to step 10 (ST10), and a character "constant speed" is displayed on displays 71a and 71b and thereafter the interruption process is completed. If the speed is not constant in step 9 (ST9), the process proceeds to step 11 (ST11) and it is determined whether or not the speed is 0. If it is, the process proceeds to step 5 (ST5) and a character "stop" is displayed on displays 71a and 71b, and thereafter the interruption process is completed. Where it is judged in step 11 (ST11) that the speed is not 0, no operation is performed and the interruption process is completed. As an acceleration-deceleration detecting sensor, a pressure sensor such as a strain gage can be provided. The pressure sensor is provided at both ends of the case with cylindrical body or rectangular body made of a material such as plastic, glass or metal, and further the liquid such as an oil is sealed in a pressurized state is enclosed in the case. Therefore, the detection output based on the detection by the strain guage is input to the input port of MPU61, thus enabling an accurate and precise control to be conducted to correspond to the variation of the state such as the slope of a road.

The vehicle's operation status display apparatus acccurately and selectively displays the current movement or stopping status of the vehicle to the following car, enabling the following car to make a judgement and select an operation by observing the display of the proceeding car, thereby maintaining smooth traffic flow and contributing to a safe traffic condition.

Figures 33 to 43 show the vehicle's movement direction display apparatus notifying the following car of the movement direction of the preceding car.

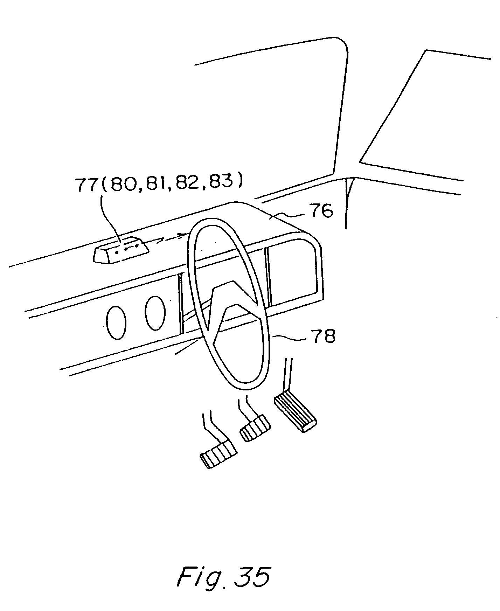

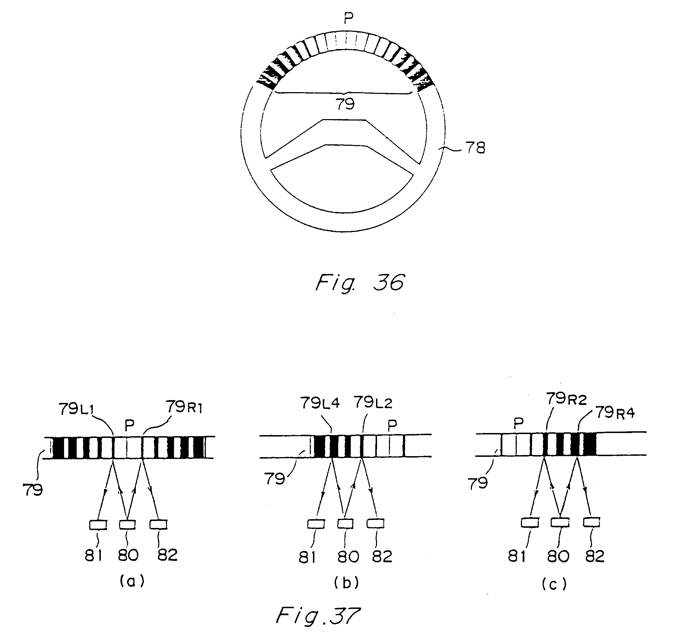

In Figure 35, detection apparatus 77 is provided on the dash board 76. A light reflecting member 79 (Figure 36) such as a mirror is provided on the rear side of handle 78 with respect to the driver. Light source 80 and two photo-receiving elements 81 and 82 display control circuit 83. Figure 36 shows the rear of handle 78 and reflector 79 is provided on the rear of handle 78. With the handle's position at 12 o'clock, i.e., with the P point of handle 78 at the reference point, the width of the reflecting member 79 sequentially increases when the reflecting member 79 is divided into a plurality of reflector units. A detection unit 77 is provided so that the light generated from light source 80 of detecting apparatus 77 is radiated on reflector 80 within the predetermined scope having the P point as a central point when the handle 78 is in a normal position (in a state in which the car moves in a straight forwarding).

Figure 37 shows a relation of part of reflector 79 and light source 80 and light receiving elements 81 and 82 in a convenient manner. Light receiving elements 81 and 82 are positioned on both sides of light source 80 and, as shown in Figure 37 (a), the reflected light provided on the left side of point P is received by light receiving element 81 and the reflected light on the right side of point P is received by light receiving element 82. In this case, the reflected light received by light receiving element 81 is provided from reflector member 79_{L1} and the reflected light received by light receiving element 82 is provided from reflecting member 79_{R1}. The width of reflector 79_{L1} is the same as that of reflector member 79_{R1}. The width of reflector body 79_{L4} is larger than that of reflecting body 79_{L2} and the quantity of light received by light receiving element 81 is larger than that of light receiving element 22. Therefore, the output voltage of light receiving element 81 is larger than that of light emitting element 82. That is, when the automobile goes straight forward, the quantity of light received by light elements 88 and 82 is the same. Light receiving elements 81 and 82 output voltages in proportion to the quantity of received light. Figure 37 (b) designates the case where 78 is rotated and then the central portion of reflector member 79 is moved toward the reflected light received by light receiving element 81 is mostly from reflector body 79_{L4} and most of the reflected light received by light receiving element 82 is the reflected light from reflector body 79_{L2}. Reflector body 79_{L4} is wider than reflector body 79_{L2} and thus, the quantity of the light received by light receiving elements 81 is larger than that received by light receiving element 82. Therefore, the output voltage of light receiving element 81 is larger than that of light receiving element 82.

Figure 37 (c) shows the case where the handle 78 is rotated anti-clockwise and the portion of reflector member 79 is moved to the left. The reflected light received by light receiving element 81 is from reflector member 79 and the reflected light received by light receiving element 82 is from reflector member 79_{R4}. Reflector body 79_{R4} is wider than reflector body 79_{R2}, the quantity of the light received by light receiving element 82 is larger than the quantity of the light received by light receiving element 81. Therefore, the output voltage of the light receiving element 81 is less than the output voltage of light receiving element 82.

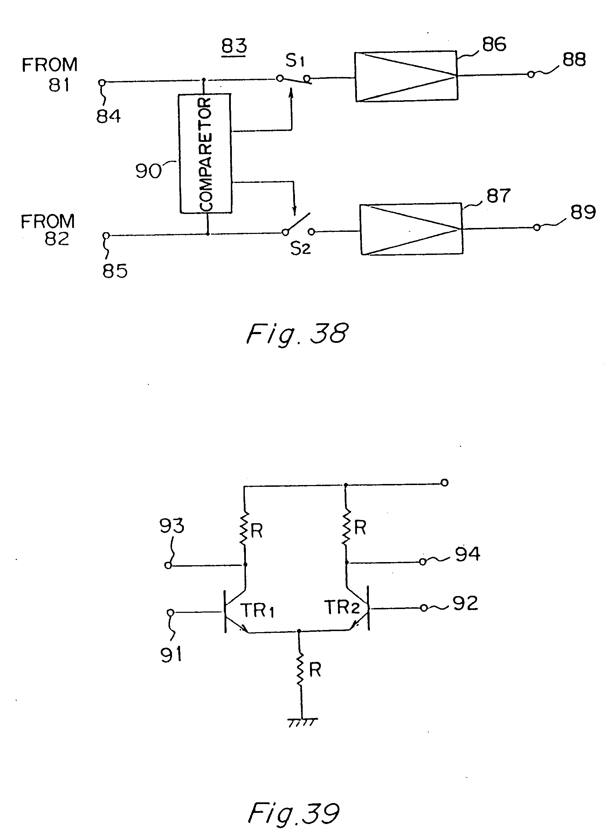

Figure 38 shows a display control circuit 83. 84 and 85 are input terminals to which the output of light receiving element 81 and 82, respectively, are input. S1 and S2 are switches and 86 and 87 are amplifiers, and 88 and 89 are output terminals. Output terminals 88 and 89 are respectively connected to a display apparatus not shown. The display apparatus connected to an output terminal 88 designates a clock wise rotation of handle 78, and the display apparatus connected to output terminal 89 represents an anti-clockwise rotation of handle 78. 90 is a comparator for comparing two input voltages and the comparator has two outputs for controlling a switching operation of switches S1 and S2. The output voltage of light receiving element 81 is input to the input terminal 84, and the output voltage of light receiving element 82 is input to input terminal 85. Input voltage input to input terminals 84 and 85 are compared by comparator 90.

Figure 39 is an example of comparator 90 which comprises transistor Tr1 and Tr2 and three resistors. The base 91 of transistor Tr 1 is connected to input terminal 84 and is provided with the output voltage of light receiving element 81. Similarly, the base 92 of transistor Tr2 is connected to input terminal 85 and is provided with the output voltage of light receiving element 82. 93 and 94 represent outputs for cotrolling switch S1 and S2. When handle 78 is in the state shown in Figure 37 (a), namely, when the car goes straight forward and the voltages from light receiving element 81 and 82 are the same and the voltages of the Tr1 and Tr2 are the same, the transistor TR1 and TR2 will be turned on. At this time, outputs 93 and 94 open both switches S1 and S2. Accordingly, the outputs of the output terminal 88 and 89 of display control circuit 83 are 0 and the display is not formed on the left side and right side. When handle 78 is rotated clockwise, and is in the state shown in Figure 37(b), the output voltage of light receiving element 81 is higher than that of light receiving element 82. Thus the basic voltage of transistor Tr1 becomes higher than that of transistor Tr2, thereby turning on transistor Tr1. Output 93 closes switch S1. As transistor Tr2 is turned off, switch S2 is opened. Accordingly, the output voltage of light receiving element 81 is provided to the display apparatus for the right direction through amplifier 86, thereby designating that handle 78 is rotated clockwise. The display apparatus for the left direction does not display anything. When handle 78 is rotated anti-clockwise and is in a state shown in Figure 37(c) opposite to the case shown in Figure 37(b), the output voltage is provided from the voltage of light receiving element 82 to output terminal 89. The display apparatus for the left direction then designates that handle 78 is rotated anti-clockwise. The output voltage supply to the display apparatus for the right or left direction from output terminals 88 or 89 is in proportion to the amount of the light received by light receiving element 81 or 82. The light receiving quantity is determined by the width of the reflector for reflecting the light. Accordingly, when the degree of the rotation of handle 78 is large, the quantity of receiving light is large and thus the output voltage increases in proportion with the degree of the rotation of handle 78. The embodiment uses two light receiving elements but one of the light receiving elements may be omitted. If a single light receiving element is used, for example, the output thereof is amplified, A/D converted by the A/D converter and then processed by a micro processor so that the appropriate display is conducted.

The display apparatuses are formed of 12 LEDs and when the output voltage from output terminal 88 and 89 become higher, LEDs are sequentially lit like a bar and the display becomes as shown in figure 29. In order to sequentially light LEDs in accordance with the output voltage, an appropriate driver IC is provided between the respective output terminals and the display apparatus. Therefore, the degree of the rotation of handle 78 is expressed by a bargraph which can be viewed by the driver of a following car.

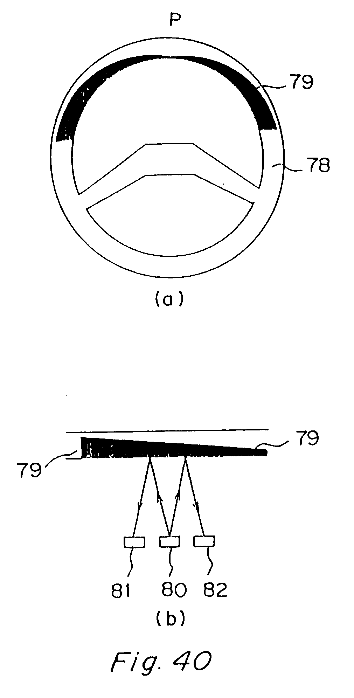

Figure 40(a) is another example of the reflecting body member. Here, the reflecting member is symmetric with regard to the reference point P and the height of the reflecting member increases in a peripheral portion. Figure 40(b) shows the case where the handle 78 is rotated clockwise and thus the quantity of the light received by light receiver 81 is larger than that received by light receiving element 82. The display control circuit shown in Figure 38 is also used in this case.

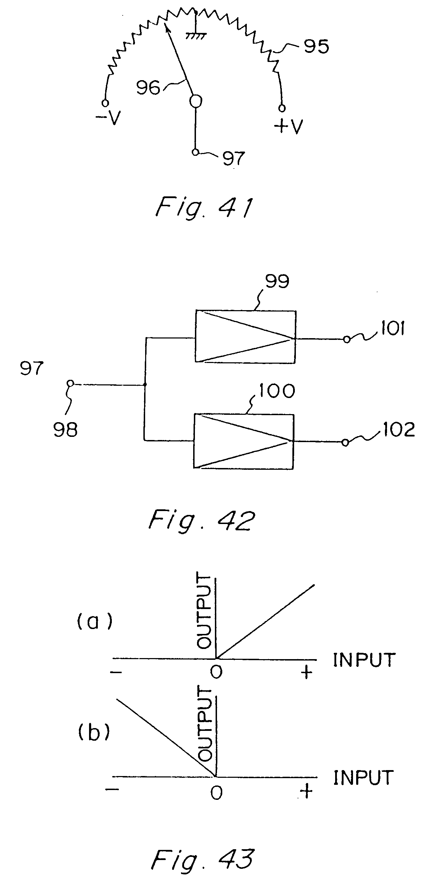

Figure 41 displaces the light source and the light receiving elements in reflecting apparatus 77 by means of a variable resistor. The sliding element 96 is connected to an axis of the handle and is slid in accordance with the rotation of the handle. A direct current voltage +V is applied to the terminal provided on the right side of variable resistor 95 and the direct current -V is added to the terminal of the left side. The center of the variable resistor 75 is grounded. The voltage corresponding to the degree of rotation of the handle is output from the output terminal 97 of sliding member 96. When the car goes forward and straight, sliding member 96 is provided at the center and is grounded, thereby providing 0 output voltage. When the handle is rotated clockwise, the positive voltage is output to the output terminal 97 and the magnitude of the voltage is in proportion to the degree of the rotation of the handle. When the handle is rotated anti-clockwise, a negative voltage is outputted.

Figure 42 shows a display control circuit. The input terminal 97 thereof is connected to the output terminal 97 of the sliding member, 99 is an amplifier for the input voltage of positive polarity, 100 is an amplifier of an input voltage of negative polarity, and 101 and 102 are output terminals connected to the display on the right side and the display on the left side irrespectively. Figure 43 (a) shows a characteristic of amplifier 99 and provides amplifying characteristic for the positive input voltage. Figure 43(b) shows a characteristic of amplifier 100 and has an amplifying characteristic only for the negative input voltage. Therefore, when the handle is rotated clockwise, the positive input voltage is input to input terminal 97, and the output voltage is provided to the display apparatus on the right side from the output terminal 101 through amplifier 99. The display apparatus on the right side represents the degree of rotation of the handle when receiving the output voltage from the output terminal 101. When the handle is rotated anti-clockwise, negative voltage is applied ,to input terminal 98 and the output voltage is outputted from the output terminal 102 thereby displaying the degree of the rotation of the handle on the left display apparatus.

As is described above, the vehicle moving direction displaying apparatus detects the degree of rotation of the handle directly from handle movement and displays it. The vehicle moving direction display apparatus is not limited to the light or variable resistor as explained above. The detecting means, for example, may comprise a permanent magnet and magnetic resistor effect element. The bar-graph of the display apparatus is explained by referring to LEDs but other light emitting body may be possible for by a character, symbol and figure. The electronic circuit for the display control element 83 comprises a micro processor unit and the control program. The Possibility of the Utilizing the Invention in the Industrial View.

As is described above, according to the present invention, it becomes possible to grasp or understand the driving status of the automobile and avoid the rear-end collisions, thereby helping to maintain a safe driving in a reliable manner, therefore the present invention is extremely useful for making a traffic condition of the society.

The Explanation of the Reference Number
- 1, 44, 61: MPU,
- 2. 49: ROM,
- 3, 50: sensor,
- 4: detecting circuit,
- 5: comparator,
- 6, 69: controller,
- 7: driver,
- 8, 43: display,
- 9, 54, 75: crystal oscillating element,
- 10: coil,
- 11, 60: condensor,
- 12, 59: resistor,
- 13: accelerator pedal,
- 14: floor,
- 15: magnetic flux bypass circuit,
- 16: casing,
- 17: inner cylindrical portion,
- 18: outer cylindrical portion,
- 19: silicon iron plate,
- 20 to 27: outer wheel display unit,
- 28: oscillating body,
- 29: oscillation sensing member,
- 30, 37: supporting member,
- 31: swinging plate,
- 32: wire rope,
- 33: spring member,
- 34: chassis,
- 35: engaging member,
- 36: variable resistor,
- 38: brake pedal,
- 39: clutch pedal,
- 40: seat,
- 41: door pocket,
- 42: 12 element LED driver,
- 44, 71a, 71b: display,
- 43, 46, 47: display member,
- 51: one shot multi vibrator,
- 52: decoder/driver,
- 53: 7 segment display comprising 4 digit,
- 55: spark plug,
- 56: neon lalmp,
- 57: high voltage introducing code,
- 58: electric line,
- 62: acceleration detecting sensor,
- 63, 65, 67: voltage converting circuit,
- 64: brake operating detecting sensor,
- 66: running speed detecting sensor,
- 68: A/D converting circuit,
- 70a, 70b, 73a, 73b: output line,
- 72a, 72b: low driver,
- 74a, 74b: column driver,
- 76: dashboard,
- 77: detecting apparatus,
- 78: handle,
- 79: reflecting member,
- 80: light source,
- 81, 82: light receiving element,
- 83: display control circuit,
- 84, 85, 98: input terminal,
- 86, 87: amplifier,
- 88, 89, 97, 101, 102: output terminal,
- 90: comparator,
- 91, 92: base,
- 93, 94: output,
- 95: variable resistor,
- 96: swinging member,
- 99: amplifier (positive),
- 100: amplifier (negative).

## Claims

1. An accelerator operation degree displaying apparatus comprising:
(a) a sensor (3) that has a parallel oscillating circuit made from a coil (10) and a capacitor (11), for sensing the degree of the operation of the accelerator in accordance with frequency variation due to the vicinity of an accelerator pedal to the parallel oscillating circuit, and
(b) displaying (8) means that has a device including an MPU and a display containing a plurality of light emitting elements (LED1-17) and a comparator with an input for the voltage based on the output of the parallel oscillating circuit and an input for the reference voltage selected under control of the MPU, which comparator produces an output, in proportion to the variation, so as to display the degree of the accelerator operation.

2. A display member for use in an accelerator operation degree displaying apparatus according to claim 1 wherein the display portion is gradually expanded in accordance with the degree of the operation of the accelerator.

3. A display member for use in an accelerator operation degree displaying apparatus according to claim 1 wherein a plurality of defining display units are cyclically and continuously formed so that the display portion can be observed to rotate in accordance with the degree of operation of the accelerator.

4. An accelerator operation degree displaying apparatus according to claim 1 wherein a vehicle display apparatus is provided with a displaying means for displaying inside the automobile the driving and running status.

5. An accelerator operation degree displaying apparatus according to claim 1 wherein a vehicle display apparatus is equipped with a light emitting display means for displaying inside an automobile the depressed degree of the accelerator pedal.

6. An accelerator operation degree displaying apparatus according to claim 1 wherein a vehicle disPlay apparatus is equipped with a light emitting display means for displaying inside an automobile the operation of a brake pedal.

7. An accelerator operation degree displaying apparatus according to claim 1 wherein a vehicle display apparatus is equipped with display means for displaying inside an automobile the number of the rotations of the engine.

8. An accelerator operation degree displaying apparatus according to claim 1 wherein a vehicle display apparatus is equipped with display means for producing a light emitting display inside an automobile of the degree of depression of the accelerator pedal and operation status of the brake pedal.

9. An accelerator operation degree displaying apparatus according to claim 1 wherein a vehicle display apparatus is equipped with display means for producing a light emitting display inside an automobile of the number of rotations of the engine and the degree of depression of the accelerator pedal.

10. An accelerator operation degree displaying apparatus according to claim 1 wherein a vehicle display apparatus is equipped with display means for producing a light emitting display inside on automobile of the operation status of the brake pedal and the number of rotations of the engine.

11. An accelerator operation degree displaying apparatus according to claim 1 wherein a vehicle display apparatus is provided with display means for producing a light emitting display inside an automobile of both the degree of depression of the operation status of the brake pedal and the number of rotations of the engine commonly.

12. An accelerator operation degree displaying apparatus according to claim 1 wherein a display apparatus is equipped with a display means for displaying outside of an automobile the number of rotations of the engine of the automobile under control of an MPU.

13. An accelerator operation degree displaying apparatus according to claim 1 wherein a display apparatus is provided comprising display means for displaying the number of rotations of the engine of the automobile so that the number can be observed from outside the automobile.

14. An accelerator operation degree displaying apparatus according to claim 1 wherein a vehicle operation status displays a running speed detection means for detecting the running speed of the vehicle, and acceleration and deceleration detecting means for detecting the acceleration and deceleration of the vehicle, wherein a plurality of different displays are selectively provided under control of an MPU based on a detection result obtained from the acceleration and deceleration detecting means and the running speed detecting means.

15. An accelerator operation degree displaying apparatus according to claim 1 wherein a vehicle moving direction display apparatus is provided comprising a detection means for detection leftwards or rightwards rotating direction and degree of handle rotation and displaying means for displaying the output of the detection means.

16. An accelerator operation degree displaying apparatus according to claim 1 wherein a sensor circuit is provided opposite an accelerator pedal, and magnetic flux path means with magnetic material adjacent to the parallel oszillating circuit.

## Patentansprüche

1. Eine den Grad der Betätigung einer Beschleunigereinrichtung (Gashebel) anzeigende Vorrichtung, aufweisend:
(a) einen Sensor (3), der einen Parallelschwingkreis aus einer Spule (10) und einem Kondensator (11) zum Abfühlen des Grades der Betätigung des Beschleunigers in Übereinstimmung mit einer Frequenzänderung zufolge der Nähe eines Beschleunigerpedals zu dem Parallelschwingkreis, und
(b) eine Anzeigevorrichtung (8), mit einer Einrichtung, die eine MPU-Einheit und eine Sichtdarstellung umfaßt, die enthält: eine Mehrzahl von lichtaussendenden Elementen (LED 1-17) und eine Vergleichseinheit mit einem Eingang für die auf dem Ausgang des Parallelschwingkreises basierende Spannung und einen Eingang für die Bezugsspannung aufweist, die unter der Steuerung der MPU-Einheit ausgewählt worden ist, wobei die Vergleichseinheit einen Ausgang erzeugt, der zu der Änderung proportional ist, um auf diese Art und Weise den Grad des Beschleunigungsvorganges darzustellen.

2. Anzeigevorrichtung zur Verwendung in einer den Grad der Betätigung einer Beschleunigereinrichtung (Gashebel) anzeigenden Vorrichtung nach Anspruch 1, wobei der Sichtdarstellungsteil in Übereinstimmung mit dem Grad der Betätigung des Beschleunigers graduell vergrößert ist.

3. Anzeigevorrichtung zur Verwendung in einer den Grad der Betätigung einer Beschleunigereinrichtung (Gashebel) anzeigenden Vorrichtung nach Anspruch 1, wobei eine Mehrzahl definierender Darstellungseinheiten zyklisch und kontinuierlich so gebildet werden, daß der Darstellungsteil beobachtet werden kann, wenn er den Grad der Betätigung des Beschleunigers entsprechend rotiert.

4. Eine den Grad der Betätigung einer Beschleunigereinrichtung (Gashebel) anzeigende Vorrichtung nach Anspruch 1, wobei eine Fahrzeuganzeigevorrichtung mit einer anzeigenden Vorrichtung zur Anzeige des Antriebs- und Lauf-Zustandes innerhalb des Kraftfahrzeuges versehen ist.

5. Eine den Grad der Betätigung einer Beschleunigereinrichtung (Gashebel) anzeigende Vorrichtung nach Anspruch 1, wobei eine Fahrzeuganzeigevorrichtung mit einer lichtaussendenden Darstellungseinrichtung zum Darstellen des Betätigungsgrades des Beschleunigerpedals innerhalb eines Kraftfahrzeugs vorgesehen ist.

6. Eine den Grad der Betätigung einer Beschleunigereinrichtung (Gashebel) anzeigende Vorrichtung nach Anspruch 1, wobei eine Fahrzeuganzeigevorrichtung mit einer lichtaussenden Darstellungseinrichtung ausgestattet ist, um innerhalb eines Kraftfahrzeuges die Betätigung des Bremspedals anzuzeigen.

7. Eine den Grad der Betätigung einer Beschleunigereinrichtung (Gashebel) anzeigende Vorrichtung nach Anspruch 1, wobei eine Fahrzeuganzeigevorrichtung mit einer Darstellungseinrichtung ausgestattet ist, um die Zahl der Umdrehungen der Maschine anzuzeigen.

8. Eine den Grad der Betätigung einer Beschleunigereinrichtung (Gashebel) anzeigende Vorrichtung nach Anspruch 1, wobei eine Fahrzeuganzeigevorrichtung mit einer Darstellungseinrichtung zur Bildung einer lichtaussendenden Darstellung innerhalb eines Kraftfahrzeuges ausgestattet ist, um den Grad des Herunterdrückens des Beschleunigerpedals und den Betriebszustand des Bremspedals anzuzeigen.

9. Eine den Grad der Betätigung einer Beschleunigereinrichtung (Gashebel) anzeigende Vorrichtung nach Anspruch 1, wobei eine Fahrzeugan-zeigevorrichtung mit einer Darstellungseinrichtung zur Bildung einer lichtaussendenden Darstellung innerhalb eines Kraftfahrzeuges ausgestattet ist, um die Zahl der Umdrehungen der Maschine und den Grad des Durchdrückens des Beschleunigerpedals anzuzeigen.

10. Eine den Grad der Betätigung einer Beschleunigereinrichtung (Gashebel) anzeigende Vorrichtung nach Anspruch 1, wobei eine Fahrzeuganzeigevorrichtung mit einer Darstellungseinrichtung zur Bildung einer lichtaussendenden Darstellung innerhalb eines Kraftfahrzeuges ausgestattet ist, um den Betätigungszustand des Bremspedals und die Zahl der Drehung der Maschine anzuzeigen.

11. Eine den Grad der Betätigung einer Beschleunigereinrichtung (Gashebel) anzeigende Vorrichtung nach Anspruch 1, wobei eine Fahrzeuganzeigevorrichtung mit einer Darstellungseinrichtung zur Bildung einer lichtaussendenden Darstellung innerhalb eines Kraftfahrzeuges ausgestattet ist, um sowohl den Grad des Herunterdrückens oder den Betriebszustandes des Bremspedals als auch die Zahl der Umdrehungen der Maschine gemeinsam anzuzeigen.

12. Eine den Grad der Betätigung einer Beschleunigereinrichtung (Gashebel) anzeigende Vorrichtung nach Anspruch 1, wobei eine Fahrzeuganzeigevorrichtung mit einer Darstellungseinrichtung ausgestattet ist, um außerhalb des Kraftfahrzeuges die Zahl der Umdrehungen der Maschine des unter Steuerung einer MPU-Einheit stehenden Kraftfahrzeuges anzuzeigen.

13. Eine den Grad der Betätigung einer Beschleunigereinrichtung (Gashebel) anzeigende Vorrichtung nach Anspruch 1, wobei eine Fahrzeuganzeigevorrichtung mit einer lichtaussendenden Darstellungseinrichtung ausgestattet ist, um die Zahl der Umdrehungen der Maschine des Kraftfahrzeuges so anzuzeigen, daß die Zahl von außerhalb des Kraftfahrzeuges beobachtet werden kann.

14. Eine den Grad der Betätigung einer Beschleunigereinrichtung (Gashebel) anzeigende Vorrichtung nach Anspruch 1, wobei eine Fahrzeug-Betätigungszustandsanzeige eine Fahrgeschwindigkeits-feststelleinrichtung zum Feststellen der Fahrgeschwindigkeit des Fahrzeuges und eine Beschleunigungs- und Verzögerungsfeststelleinrichtung aufweist, um die Beschleunigung und die Verzögerung des Fahrzeuges festzustellen, wobei eine Mehrzahl unterschiedlicher Anzeigen wahlweise unter Steuerung einer MPU-Einheit vorgesehen ist, die auf einem Feststellungsresultat basiert, welches von der Beschleunigungs- und Verzögerungs-feststelleinrichtung und der Laufgeschwindigkeits-feststelleinrichtung erhalten wird.

15. Eine den Grad der Betätigung einer Beschleunigereinrichtung (Gashebel) anzeigende Vorrichtung nach Anspruch 1, wobei eine Fahrzeugbewegungsrichtungsanzeigevorrichtung vorgehen ist, die eine Feststelleinrichtung zum Feststellen der linksseitigen oder rechtsseitigen Drehung und des Grades der Handgriffdrehung und eine Darstellungseinrichtung zum Darstellen des Ausgangs der Feststelleinrichtungen aufweist.

16. Eine den Grad der Betätigung einer Beschleunigereinrichtung (Gashebel) anzeigende Vorrichtung nach Anspruch 1, wobei ein Sensorstromkreis einem Beschleunigerpedal gegenüberliegend vorgesehen ist, und ein Magnetflußweg mit magnetischem Material in der Nähe des Parallelschwingkreises angeordnet ist.

## Revendications

1. Appareil d'affichage du degré d'actionnement d'un accélérateur, comprenant :
- un capteur (3) qui a un circuit oscillant parallèle composé d'une bobine (10) et d'un condensateur (11) pour détecter le degré d'actionnement de l'accélérateur selon une variation de fréquence due à la proximité d'une pédale d'accélérateur proche du circuit oscillant parallèle; et
- des moyens d'affichage (8) qui ont un dispositif comportant un microprocesseur et un dispositif d'affichage comportant une pluralité d'éléments émetteurs de lumière (LED1-17) et un comparateur avec une entrée pour la tension basée sur le signal de sortie du circuit oscillant parallèle et une entrée pour la tension de référence sélectionnée sous la commande du microproceseur, lequel comparateur produit un signal de sortie en proportion de la variation, de manière à afficher le degré d'actionnement de l'accélérateur.

2. Organe d'affichage pour utilisation dans un appareil d'affichage du degré d'actionnement d'un accélérateur selon la revendication 1, dans lequel la partie affichage est progressivement étendue selon le degré d'actionnement de l'accélérateur.

3. Organe d'affichage pour utilisation dans un appareil d'affichage du degré d'actionnement d'un accélérateur selon la revendication 1, dans lequel une pluralité d'unités d'affichage définissantes sont formées cycliquement et de façon continue de manière que la partie affichage puisse être observée tournant selon le degré d'actionnement de l'accélérateur.

4. Appareil d'affichage du degré d'actionnement d'un accélérateur selon la revendication 1, dans lequel un appareil d'affichage de véhicule est équipé de moyens d'affichage pour afficher à l'intérieur d'une automobile l'état de conduite et de marche.

5. Appareil d'affichage du degré d'actionnement d'un accélérateur selon la revendication 1, dans lequel un appareil d'affichage est équipé de moyens d'affichage émetteurs de lumière pour afficher à l'intérieur d'une automobile le degré d'enfoncement de la pédale d'accélérateur.

6. Appareil d'affichage du degré d'actionnement d'un accélérateur selon la revendication 1, dans lequel un appareil d'affichage de véhicule est équipé de moyens d'affichage émetteurs de lumière pour afficher à l'intérieur d'une automobile l'actionnement d'une pédale de frein.

7. Appareil d'affichage du degré d'actionnement d'un accélérateur selon la revendication 1, dans lequel un appareil d'affichage de véhicule est équipé de moyens d'affichage pour afficher à l'intérieur d'une automobile la vitesse de rotation du moteur.

8. Appareil d'affichage du degré d'actionnement d'un accélérateur selon la revendication 1, dans lequel un appareil d'affichage est équipé de moyens d'affichage pour produire un affichage émetteur de lumière, à l'intérieur d'une automobile, du degré d'enfoncement de la pédale d'accélérateur et de l'état d'actionnement de la pédale de frein.

9. Appareil d'affichage du degré d'actionnement d'un accélérateur selon la revendication 1, dans lequel un appareil d'affichage de véhicule est équipé de moyens d'affichage pour produire un affichage émetteur de lumière, à l'intérieur d'une automobile, de la vitesse de rotation du moteur et du degré d'enfoncement de la pédale d'accélérateur.

10. Appareil d'affichage du degré d'actionnement d'un accélérateur selon la revendication 1, dans lequel un appareil d'affichage de véhicule est équipé de moyens d'affichage pour produire un affichage émetteur de lumière, à l'intérieur d'une automobile, de l'état d'actionnement de la pédale de frein et de la vitesse de rotation du moteur.

11. Appareil d'affichage du degré d'actionnement d'un accélérateur selon la revendication 1, dans lequel un appareil d'affichage de véhicule est équipé de moyens d'affichage pour produire un affichage émetteur de lumière, à l'intérieure d'une automobile, tant du degré d'enfoncement de la pédale d'accélérateur que de l'état d'actionnement de la pédale de frein et de la vitesse de rotation du moteur en commun.

12. Appareil d'affichage du degré d'actionnement d'un accélérateur selon la revendication 1, dans lequel un appareil d'affichage est équipé de moyens d'affichage pour afficher à l'extérieur d'une automobile la vitesse de rotation du moteur sous la commande d'un microprocesseur.

13. Appareil d'affichage du degré d'actionnement d'un accélérateur selon la revendication 1, dans lequel un appareil d'affichage est prévu comprenant des moyens d'affichage pour afficher la vitesse de rotation du moteur de l'automobile de telle manière que la vitesse de rotation puisse être observée à l'extérieur de l'automobile.

14. Appareil d'affichage du degré d'actionnement d'un accélérateur selon la revendication 1, dans lequel un appareil d'affichage de l'état de fonctionnement du véhicule comprend des moyens de détection de vitesse de marche pour détecter la vitesse de marche du véhicule et des moyens de détection d'accélération et de décélération pour détecter l'accélération et la décélération du véhicule, et dans lequel une pluralité d'affichages différents sont sélectivement fournis sous la commande d'un microprocesseur sur la base d'un résultat de détection obtenu à la sortie des moyens de détection d'accélération et de décélération et des moyens de détection de la vitesse de marche.

15. Appareil d'affichage du degré d'actionnement d'un accélérateur selon la revendication 1, dans lequel un appareil d'affichage de la direction de déplacement d'un véhicule est prévu comprenant des moyens de détection pour détecter le sens de rotation vers la gauche ou vers la droite et le degré de rotation du volant, et des moyens d'affichage pour afficher le signal de sortie des moyens de détection.

16. Appareil d'affichage du degré d'actionnement d'un accélérateur selon la revendication 1, dans lequel un circuit capteur est prévu en face d'une pédale d'accélérateur, ainsi que des moyens à chemin de flux magnétique avec un matériau magnétique voisin du circuit oscillant parallèle.
